# EUROPÄISCHE PATENTSCHRIFT

(11) **EP 3 574 269 B1**
(45) Veröffentlichungstag und Bekanntmachung des Hinweises auf die Patenterteilung: **09.08.2023**
(21) Anmeldenummer: 17703082.2
(22) Anmeldetag: 30.01.2017
(51) Int. Cl.: F25B 11/02, F25B 1/10

(54) **EXPANSIONSEINHEIT ZUM EINBAU IN EINEN KÄLTEMITTELKREISLAUF**
EXPANSION UNIT FOR INSTALLATION IN A REFRIGERANT CIRCUIT
UNITÉ D'EXPANSION A INTÉGRER DANS UN CIRCUIT DE RÉFRIGÉRATION

(43) Veröffentlichungstag der Anmeldung: 04.12.2019
(73) Patentinhaber: BITZER Kühlmaschinenbau GmbH, 71065 Sindelfingen (DE)
(72) Erfinder: KARBINER, Julian, 71229 Leonberg (DE); JAVERSCHEK, Oliver, 72072 Tübingen (DE); NICKL, Jörg, 01744 Malter (DE)
(74) Vertreter: Hoeger, Stellrecht & Partner Patentanwälte mbB
(86) Internationale Anmeldenummer: PCT/EP2017/051943
(87) Internationale Veröffentlichungsnummer: WO 2018/137783

(56) Entgegenhaltungen:
- EP-A2- 0 239 680
- EP-A2- 2 272 757
- WO-A1-2008/142714
- DE-A1-102006 010 122
- US-A1- 2015 211 772

## Beschreibung

Die Erfindung betrifft einen Kältemittelkreislauf umfassend eine Kältemittelverdichtereinheit, einen druckseitig der Kältemittelverdichtereinheit im Kältemittelkreislauf angeordneten wärmeabgebenden Wärmetauscher, eine Expansionseinheit sowie eine Kühlstufe mit mindestens einem wärmeaufnehmenden Wärmetauscher.

Derartige Kältemittelkreisläufe mit Expansionseinheiten sind bekannt.

Üblicherweise sind die Expansionseinheiten durch Expansionsventile gebildet oder durch energieerzeugende Expansionsmaschinen.

Derartige Kältemittelkreisläufe sind aus der EP 2 272 757 A2 oder der US 2015/0211772 A1 bekannt.

Der Erfindung liegt die Aufgabe zugrunde, einen Kältemittelkreislauf mit einer energetisch hocheffizienten Expansionseinheit zur Verfügung zu stellen.

Diese Aufgabe wird durch einen Kältemittelkreislauf gemäß Anspruch 1 gelöst.

Der Vorteil der erfindungsgemäßen Lösung ist darin zu sehen, dass diese energetisch hocheffizient arbeitet, da in dem der Expanderstufe zugeführten Massenstrom keinerlei Drosselorgan vorgesehen ist, um den zur Expanderstufe strömenden Massenstrom einzustellen.

Erfindungsgemäß ist außerdem vorgesehen, dass die Expanderstufe und die Kompressorstufe der Expansionskompressionseinheit mechanisch funktionell gekoppelt sind.

Eine derartige mechanische funktionelle Kopplung bedeutet, dass die bei der Expanderstufe generierte Energie über eine mechanische Verbindung direkt auf die Kompressorstufe übertragen wird.

Diese Lösung hat andererseits aber auch den Vorteil, dass die erfindungsgemäße Lösung, nämlich die Steuerung des durch die Expanderstufe expandierten Massenstroms in einfacher Weise über den Unterkühlungsmassenstrom, der durch die Kompressorstufe komprimiert wird, gesteuert werden kann.

Vielmehr erfolgt ein Einstellen des zur Expanderstufe strömenden und für den Eingangsdruck der Expansionseinheit oder der Expansionskompressionseinheit relevanten Massenstroms ausschließlich über die Steuerung des Unterkühlungsmassenstroms mittels des von der Steuerung angesteuerten Expansionsorgans, so dass bei der Expansion des Massenstroms in der Expanderstufe eine maximale Energierückgewinnung erfolgt, die zum Verdichten des Unterkühlungsmassenstroms in der Kompressorstufe eingesetzt werden kann, so dass dadurch gleichzeitig wiederum eine optimale Unterkühlung des expandierten Massenstroms vor dessen Expansion erfolgt.

Insbesondere umfasst hierzu das Expansionsorgan einen elektrisch antreibbaren Stellmotor.

Eine besonders günstige Lösung sieht vor, dass die Verzweigung zwischen der Unterkühlungseinheit und der Expansionskompressionseinheit angeordnet ist und nach der Unterkühlungseinheit von dem Gesamtmassenstrom den Unterkühlungsmassenstrom abzweigt.

Diese Lösung ist energetisch dadurch vorteilhaft, da damit der abgezweigte Unterkühlungsmassenstrom ebenfalls bereits in der Unterkühlungsmasseneinheit vorab gekühlt wurde.

Diese Lösung ist insbesondere bei subkritischer Wärmeabfuhr vorteilhaft und gestattet eine stärkere Unterkühlung.

Ferner hat diese Lösung den Vorteil, dass von der Expansionskompressionseinheit ausgehende Pulsationen durch die von der Abzweigung wegführende Zuleitung mit dem Expansionsorgan gedämpft werden.

Hinsichtlich der Ausbildung der Unterkühlungseinheit wurden bislang keine näheren Angaben gemacht.

So kann die Unterkühlungseinheit unterschiedlich ausgebildet sein.

Eine Lösung sieht vor, dass die Unterkühlungseinheit als Wärmetauschereinheit ausgebildet ist und den zur Expanderstufe strömenden Massenstrom des Kältemittels durch den im Gegenstrom durch diese geführten Unterkühlungsmassenstrom kühlt.

Eine andere vorteilhafte Lösung sieht vor, dass die Unterkühlungseinheit als Sammelbehälter ausgebildet ist, in welchem sich ein Bad aus flüssigem Kältemittel des Unterkühlungsmassenstroms ausbildet, welches ein den zur Expanderstufe strömenden Massenstrom des Kältemittels durch das Bad führendes Element kühlt, wobei sich über dem Bad ein Gasvolumen bildet, aus welchem der gasförmige Unterkühlungsmassenstrom abgeführt wird.

Diese Lösung hat den Vorteil, dass einerseits der durch das Element geführte Massenstrom optimal unterkühlt wird und andererseits durch die Abfuhr des Unterkühlungsmassenstroms aus dem Gasvolumen sichergestellt werden kann, dass der Kompressorstufe kein flüssiges Kältemittel zum Verdichten zugeführt wird.

Hinsichtlich der Messung der Temperatur des Massenstroms des Kältemittels sind die unterschiedlichsten Lösungen denkbar.

Eine Lösung sieht vor, dass die Steuerung die Umgebungstemperatur und/oder die Temperatur des Massenstroms des Kältemittels vor einem Eingang der Unterkühlungseinheit und/oder vor dem Eintritt desselben in die Expanderstufe mittels eines Sensors misst.

Eine weitere, die Temperatur des Massenstroms des Kältemittels umfassend erfassende Lösung sieht vor, die Temperatur des Massenstroms des Kältemittels vor dessen Eintritt in die Unterkühlungseinheit und vor dessen Eintritt in die Expanderstufe jeweils mit einem Sensor zu messen.

Eine weitere Lösung sieht vor, dass die Steuerung die Umgebungstemperatur mittels eines Sensors erfasst und diese allein oder gegebenenfalls in Kombination mit der Temperatur des Massenstroms des Kältemittels vor dessen Eintritt in die Unterkühlungseinheit und/oder vor dessen Eintritt in die Expanderstufe für die Steuerung des Expansionsorgans berücksichtigt.

Besonders vorteilhaft ist es, wenn die Steuerung eine elektronische, einen Prozessor umfassende Steuerung ist, die mittels eines Steuerprogramms das Expansionsorgan elektrisch ansteuert, da mit einem Prozessor die vielfältigen Korrelationen zwischen der gemessenen Temperatur und dem mit dem Expansionsorgan zu steuernden Unterkühlungsmassenstrom in einfacher Weise realisiert werden können.

Insbesondere besteht bei dieser Ausbildung der Steuerung die Möglichkeit das Expansionsorgan stets so zu steuern, dass der Unterkühlungsmassenstrom im überhitzten Zustand aus der Unterkühlungseinheit austritt und somit vermieden wird, dass teilweise flüssiges Kältemittel im Unterkühlungsmassenstrom aus der Unterkühlungseinheit austritt und der Expansionsstufe zugeführt wird.

Zur Überwachung der Temperatur des aus der Unterkühlungseinheit austretenden Unterkühlungsmassenstroms ist insbesondere ein mit der Steuerung verbundener Sensor in einer Verbindungsleitung zwischen der Unterkühlungseinheit und der Expanderstufe vorgesehen.

Bei der beschriebenen Lösung ist das Steuerprogramm insbesondere so ausgebildet, dass es entweder einen Algorithmus zur Festlegung der Ansteuerung des Expansionsorgans umfasst oder eine abgespeicherte Korrelationstabelle, welche die Einstellung des Expansionsorgans mit der gemessenen Temperatur des zugeführten Massenstroms korreliert.

Hinsichtlich der Verbindung der Expanderstufe und der Kompressorstufe wurden bislang keine näheren Angaben gemacht.

Prinzipiell können die Expanderstufe und die Kompressorstufe durch geeignete Arten von rotierend angetriebenen Maschinen gebildet sein.

Eine besonders vorteilhafte Lösung sieht vor, dass die Expanderstufe und die Kompressorstufe durch eine Freikolbenmaschine gebildet sind, in welcher mindestens ein Freikolben in einer Kolbenkammer frei bewegbar ist.

Vorzugsweise ist die Expansionskompressionseinheit dabei so ausgebildet, dass sie zwei Kolbenkammern aufweist, in denen jeweils ein Freikolben bewegbar ist.

Ferner sind vorzugsweise die Freikolben miteinander gekoppelt bewegbar.

Bei der erfindungsgemäßen Freikolbenmaschine ist vorzugsweise vorgesehen, dass ein erster Freikolben in der jeweiligen Kolbenkammer eine erste Expansionskammer und eine erste Kompressionskammer voneinander trennt.

Ferner ist vorteilhafterweise vorgesehen, dass ein zweiter Freikolben in der jeweiligen Kolbenkammer eine zweite Expansionskammer von einer zweiten Kompressionskammer trennt.

Um die beiden Freikolben in vorteilhafter Weise zu betreiben ist vorzugsweise vorgesehen, dass die beiden Freikolben in den Kolbenkammern koaxial zueinander angeordnet und bewegbar sind.

Zweckmäßigerweise ist die erste Kolbenkammer von der zweiten Kolbenkammer durch einen Trennkörper getrennt.

Ein vorteilhafter Betrieb der Expansionskompressionseinheit lässt sich dann realisieren, wenn die beiden Expansionskammern an den Trennkörper angrenzend in den Kolbenkammern angeordnet sind.

Ferner ist vorzugsweise vorgesehen, dass die beiden Kompressionskammern auf den Expansionskammern gegenüberliegenden Seiten der jeweiligen Freikolben angeordnet sind.

Prinzipiell können die Freikolben unabhängig voneinander arbeiten.

Eine vorteilhafte Lösung sieht jedoch vor, dass ein die Freikolben koppelndes Kopplungselement sich durch den Trennkörper hindurch erstreckt und relativ zu diesem, insbesondere abgedichtet, bewegbar ist.

Im einfachsten Fall ist dabei das Kopplungselement so ausgebildet, dass es sich jeweils durch die Expansionskammern bis zu dem jeweiligen Freikolben erstreckt.

Hinsichtlich des Zustroms des Kältemittels zu den Expansionskammern ist vorzugsweise vorgesehen, dass dieser durch ein Schiebersystem steuerbar sind.

Ein derartiges Schiebersystem ist beispielsweise als Wechselschieber ausgebildet, so dass in einer Schieberstellung das Kältemittel in eine Expansionskammer strömt und aus der anderen Expansionskammer abströmt und in der anderen Schieberstellung das Kältemittel in die andere Expansionskammer strömt und aus der einen Expansionskammer abströmt.

Zur Steuerung des Schiebersystems ist vorzugsweise vorgesehen, dass das Schiebersystem durch einen Schieberantrieb steuerbar ist, mit dem die beiden Schieberstellungen einstellbar sind.

Ein derartiger Schieberantrieb kann durch eine elektrische Steuerung erfolgen, welche mindestens eine Position der Freikolben mittels mindestens einem diesen zugeordneten Positionssensor erfasst.

Alternativ dazu sieht eine vorteilhafte Lösung vor, dass der Schieberantrieb durch eine Druckdifferenz zwischen einem Expandereingang und einem Expanderausgang steuerbar ist.

Vorzugsweise ist dabei der Schieberantrieb als doppelwirkender Betätigungszylinder ausgebildet, dessen Kolben einerseits mit dem Druck am Expandereingang und andererseits mit dem Druck am Expanderausgang beaufschlagt ist.

Zur Ansteuerung einer derartigen Antriebseinheit ist zweckmäßigerweise vorgesehen, dass der Schieberantrieb durch einen Steuerschieber ansteuerbar ist, welcher die Beaufschlagung des Kolbens mit dem Druck am Expandereingang einerseits und am Expanderausgang andererseits steuert.

Der Steuerschieber ist vorzugsweise so ausgebildet, dass er die Positionen der Freikolben erfasst und sich entsprechend diesen bewegt.

Insbesondere ist vorgesehen, dass der Steuerschieber durch die Freikolben bewegbar ist.

Um die erfindungsgemäße Expansionseinheit vorzugsweise als eine einzige, fertig montierte Einheit liefern und in einen Kältemittelkreislauf einbauen zu können, ist vorzugsweise vorgesehen, dass die Expansionseinheit eine Vorrichtungsbasis aufweist, an welcher die Unterkühlungseinheit und die Expansionskompressionseinheit angeordnet ist.

Ferner ist es günstig, wenn an der Vorrichtungsbasis auch die Steuereinheit angeordnet ist.

Darüber hinaus ist es für den Einbau von Vorteil, wenn an der Vorrichtungsbasis ein Hochdruckeingangsanschluss und ein Expansionsdruckausgangsanschluss angeordnet ist.

Ferner ist bei einer vorteilhaften Lösung vorgesehen, dass an der Vorrichtungsbasis ein Hochdruckausgangsanschluss angeordnet ist, über welchen beim Einbau der Expansionseinheit der verdichtete Unterkühlungsmassenstrom abströmt.

Eine weitere vorteilhafte Lösung sieht vor, dass an der Vorrichtungsbasis Wärmetauscheranschlusseinheiten vorgesehen sind, mit denen mehrere hochdruckseitige Wärmetauscher angeschlossen werden können.

Insbesondere ist dabei jede der Wärmetauscheranschlusseinheiten so ausgebildet, dass sie jeweils ein Dreiwegeventil und jeweils eine Überbrückung für den jeweiligen Wärmetauscher aufweist, so dass durch das Dreiwegeventil die Möglichkeit besteht, die Durchströmung des jeweiligen Wärmetauschers zu steuern.

Insbesondere ist dabei vorgesehen, dass mindestens eine der Wärmetauscheranschlusseinheiten mit einem hochdruckseitigen, Wärme an die Umgebungsluft abgebenden Wärmetauscher verbunden ist.

Eine weitere vorteilhafte Ausführungsform einer Expansionseinheit sieht vor, dass die Expansionseinheit ein Expansionssystem mit einem ersten, durch den Quotienten des Volumens der Kompressionskammern zu dem Volumen der Expansionskammern definierten Volumenverhältnis aufweist und dass dem ersten Expansionssystem ein zweites Expansionssystem parallel geschaltet ist, dessen Volumenverhältnis anders als das des ersten Expansionssystems ist.

Eine derartige Expansionseinheit hat den Vorteil, dass durch die beiden Expansionssysteme mit unterschiedlichem Volumenverhältnis die Möglichkeit besteht, die Expansion des Kältemittels den jeweiligen Betriebszuständen optimal anzupassen.

Besonders vorteilhaft ist es, wenn die Expansionssysteme derart betrieben sind, dass das Eine der Expansionssysteme im transkritischen Bereich und das andere der Expansionssysteme im subkritischen Bereich arbeitet.

Vorteilhafterweise arbeitet dabei das Expansionssystem mit dem größeren Volumenverhältnis im transkritischen Bereich und das Expansionssystem mit dem kleineren Volumenverhältnis im subkritischen Bereich.

Um die Expansionssysteme korreliert arbeiten zu lassen ist vorzugsweise vorgesehen, dass die Steuerungen der Expansionssysteme miteinander gekoppelt sind.

Alternativ zum Vorsehen zweier Expansionssysteme in einer Expansionseinheit ist vorzugsweise vorgesehen, dass die Expansionseinheit zwei Expansionskompressionseinheiten umfasst, von denen die eine ein erstes, durch den Quotienten aus dem Volumen der Expansionskammern zu dem Volumen der Kompressionskammern definiertes Volumenverhältnis aufweist und die andere ein zweites Volumenverhältnis aufweist, das von dem ersten Volumenverhältnis abweicht.

Auch in diesem Fall ist durch die Expansionseinheit, die zwei Expansionskompressionseinheiten mit verschiedenen Volumenverhältnissen aufweist, eine optimale Anpassung an die verschiedenen Betriebsbedingungen möglich.

Bei einer derartigen Expansionseinheit die zwei Expansionskompressionseinheiten aufweist ist vorzugsweise vorgesehen, dass nur eine Unterkühlungseinheit vorhanden ist, und dass nach der einen Unterkühlungseinheit der Unterkühlungsmassenstrom entweder der einen Expansionskompressionseinheit oder der anderen Expansionskompressionseinheit oder gegebenenfalls beiden Expansionskompressionseinheiten zugeführt wird.

Vorzugsweise ist bei diesen derartigen zwei Expansionskompressionseinheiten vorgesehen, dass das Volumenverhältnis der ersten Expansionskompressionseinheit größer ist als das Volumenverhältnis der zweiten Expansionskompressionseinheit.

Insbesondere arbeitet dabei die erste Expansionskompressionseinheit im transkritischen Bereich und die zweite Expansionskompressionseinheit im subkritischen Bereich.

Insbesondere ist dabei vorgesehen, dass die Steuerung in der Lage ist, festzulegen, ob die erste Expansionskompressionseinheit oder die zweite Expansionskompressionseinheit zum Einsatz kommt und gegebenenfalls dann, wenn beide Expansionskompressionseinheiten zum Einsatz kommen, die Aufteilung des Expansionsmassenstroms in die zu den jeweiligen Expanderstufen strömenden Teilmassenströme zu den Expansionskompressionseinheiten zu steuern.

Die Steuerung der Verteilung des Expansionsmassenstroms E auf die erste oder die zweite Expansionskompressionseinheit oder die Aufteilung desselben auf die Expansionskompressionseinheiten kann entweder über die Steuerung der Unterkühlungsmassenströme durch entsprechende Steuerorgane oder über die direkte Steuerung des zu expandierenden Massenstroms über entsprechende Steuerorgane erfolgen.

Darüber hinaus betrifft die Erfindung einen Kältemittelkreislauf, wobei erfindungsgemäß die Expansionseinheit nach einem oder mehreren der vorstehend beschriebenen Merkmale ausgebildet ist.

Prinzipiell ist es denkbar, die Kühlstufe ohne eigenes Expansionsorgan zu betreiben und in der Kühlstufe mit dem von der Expansionseinheit expandierten Massenstrom zu arbeiten.

In diesem Fall ist es zweckmäßig, wenn auf die Kühlstufe folgend ein Phasenseparator angeordnet ist, dessen Gasphase von einer Saugdruckleitung dem Kältemittelverdichter zugeführt wird.

Ein derartiger Phasenseparator hat den Vorteil, dass dadurch verhindert wird, dass dem Kältemittelverdichter flüssiges Kältemittel zur Verdichtung zugeführt wird.

Eine andere vorteilhafte Lösung sieht vor, dass die Kühlstufe mindestens ein Expansionsorgan aufweist, so dass mit diesem die Möglichkeit besteht, den in der Kühlstufe gewünschten Druck festzulegen.

Eine weitere vorteilhafte Variante eines erfindungsgemäßen Kältemittelkreislaufs sieht vor, dass zwischen der Expansionseinheit und der Kühlstufe ein Zwischendrucksammler angeordnet ist, in dessen Bad sich eine Flüssigphase des Kältemittels sammelt und in dessen über dem Bad stehendem Gasvolumen sich eine Gasphase des Kältemittels sammelt.

Bei dieser Lösung wird vorzugsweise die Flüssigphase der Kühlstufe zur Expansion in dem Expansionsorgan derselben zugeführt.

In diesem Fall hat der Zwischendrucksammler den Vorteil, dass noch eine zusätzliche Unterkühlung durch den Zwischendruck des Kältemittels durch den Zwischendrucksammler realisierbar ist.

Im Fall eines Zwischendrucksammlers ist vorzugsweise vorgesehen, dass aus dem Gasvolumen des Zwischendrucksammlers ein Zusatzmassenstrom abgeführt wird.

Ein derartiger Zusatzmassenstrom lässt sich insbesondere über ein Expansionsorgan der Saugdruckleitung zuführen.

Eine andere vorteilhafte Lösung sieht vor, dass der vom Expansionsorgan expandierte Zusatzmassenstrom einen zur Kühlstufe geführten Hauptmassenstrom in einem Wärmetauscher kühlt, um in dem Hauptmassenstrom noch eine zusätzliche Unterkühlung zu erreichen.

Eine weitere vorteilhafte Variante des erfindungsgemäßen Kältemittelkreislaufs sieht vor, dass der Kühlstufe eine Tiefkühlstufe parallel geschaltet ist.

Im Fall einer Tiefkühlstufe ist zweckmäßigerweise vorgesehen, dass ein der Tiefkühlstufe zugeführter Tiefkühlmassenstrom vor einer Expansion in einem der Tiefkühlstufe zugeordneten Expansionsorgan durch den in der Tiefkühlstufe expandierten Massenstrom mittels eines Wärmetauschers gekühlt wird.

Eine weitere vorteilhafte Variante eines erfindungsgemäßen Kältemittelkreislaufs sieht vor, dass der von dem wärmeabgebenden Wärmetauscher gekühlte Gesamtmassenstrom mittels eines Wärmetauschers durch den durch das Expansionsorgan expandierten Zusatzmassenstrom gekühlt wird.

Eine weitere vorteilhafte Variante eines erfindungsgemäßen Kältemittelkreislaufs sieht vor, dass der Expansionseinheit ein Wärmetauscher nachgeordnet ist, in welchem ein Wärmetauschermedium einer Kühlanlage durch den Expansionsmassenstrom gekühlt wird.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung eines ersten Ausführungsbeispiels eines erfindungsgemäßen Kältemittelkreislaufs;
- Fig. 2: eine schematische Darstellung eines ersten Ausführungsbeispiels einer erfindungsgemäßen Expansionseinheit;
- Fig. 3: eine schematische Darstellung eines ersten Ausführungsbeispiels einer erfindungsgemäßen Expansionskompressionseinheit;
- Fig. 4: eine schematische Darstellung ähnlich Fig. 3 eines zweiten Ausführungsbeispiels einer erfindungsgemäßen Expansionskompressionseinheit;
- Fig. 5: eine schematische Darstellung eines zweiten Ausführungsbeispiels eines erfindungsgemäßen Kältemittelkreislaufs;
- Fig. 6: eine schematische Darstellung eines dritten Ausführungsbeispiels eines erfindungsgemäßen Kältemittelkreislaufs;
- Fig. 7: eine schematische Darstellung eines vierten Ausführungsbeispiels eines erfindungsgemäßen Kältemittelkreislaufs;
- Fig. 8: eine schematische Darstellung eines fünften Ausführungsbeispiels eines erfindungsgemäßen Kältemittelkreislaufs;
- Fig. 9: eine schematische Darstellung eines zweiten Ausführungsbeispiels einer erfindungsgemäßen Expansionseinheit;
- Fig. 10: eine schematische Darstellung verschiedener Betriebsweisen des zweiten Ausführungsbeispiels der erfindungsgemäßen Expansionseinheit;
- Fig. 11: eine schematische Darstellung eines dritten Ausführungsbeispiels einer erfindungsgemäßen Expansionseinheit;
- Fig. 12: eine schematische Darstellung eines vierten Ausführungsbeispiels einer erfindungsgemäßen Expansionseinheit;
- Fig. 13: eine schematische Darstellung eines fünften Ausführungsbeispiels einer erfindungsgemäßen Expansionseinheit;
- Fig. 14: eine schematische Darstellung eines sechsten Ausführungsbeispiels einer erfindungsgemäßen Expansionseinheit;
- Fig. 15: eine schematische Darstellung eines siebten Ausführungsbeispiels einer erfindungsgemäßen Expansionseinheit;

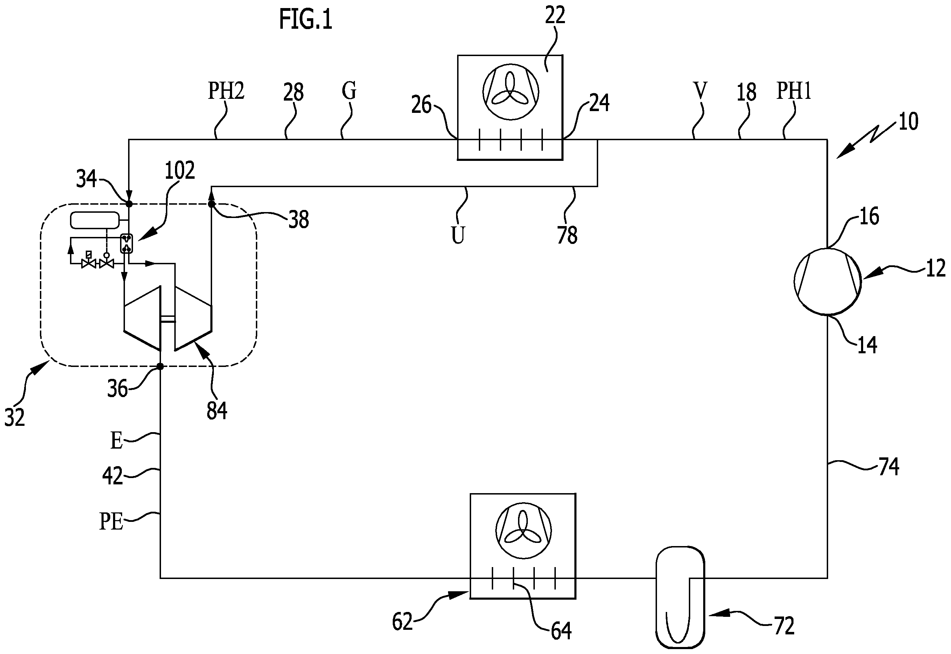

Ein erstes Ausführungsbeispiel einer erfindungsgemäßen Kälteanlage, dargestellt in Fig. 1, umfasst einen als Ganzes mit 10 bezeichneten Kältemittelkreislauf, in welchem eine als Ganzes mit 12 bezeichnete Kältemittelverdichtereinheit angeordnet ist, die beispielsweise mindestens einen Kältemittelverdichter umfasst.

Die Kältemittelverdichtereinheit 12 weist einen Sauganschluss 14 und einen Druckanschluss 16 auf, wobei am Druckanschluss 16 üblicherweise auf Hochdruck PH1 komprimiertes Kältemittel vorliegt.

Unter dem Begriff "auf Hochdruck komprimiertes Kältemittel" ist dabei zu verstehen, dass das Kältemittel den höchsten, im Kältemittelkreislauf vorliegenden Druck aufweist.

Von dem Druckanschluss 16 führt eine Hochdruckleitung 18 einen von der Kältemittelverdichtereinheit 12 auf Hochdruck PH1 verdichteten Verdichtermassenstrom V zu einem Eingang 24 eines als Ganzes mit 22 bezeichneten hochdruckseitigen wärmeabgebenden Wärmetauschers, welcher insbesondere an die Umgebungsluft Wärme abgibt und somit das Kältemittel abkühlt, so dass an einem Ausgang 26 des hochdruckseitigen Wärmetauschers 22 ein Gesamtmassenstrom G von durch den hochdruckseitigen Wärmetauscher 22 gekühltem Kältemittel vorliegt, der von einer Kältemittel bei einem Hochdruck PH2, der aufgrund des Wärmetauschers 22 geringfügig niedriger als der Hochdruck PH1 ist, führenden Hochdruckableitung 28 einem ersten Ausführungsbeispiel einer als Ganzes mit 32 bezeichneten hochdruckregelnden Expansionseinheit 32 zugeführt wird, die einen mit der Hochdruckableitung 28 verbundenen Hochdruckeingangsanschluss 34, einen Expansionsdruckausgangsanschluss 36 und einen Hochdruckausgangsanschluss 38 aufweist.

Dabei ist der auf Expansionsdruck PE liegende Expansionsdruckausgangsanschluss 36 mit einer Expansionsleitung 42 verbunden, die bei dem in Fig. 1 dargestellten einfachsten Ausführungsbeispiel zu einer Kühlstufe 62 führt, die im einfachsten Fall einen zur Kühlung wärmeaufnehmenden Wärmetauscher 64 aufweist.

Bei diesem vereinfachten Ausführungsbeispiel liegt der wärmeaufnehmende Wärmetauscher 64 auf dem Expansionsdruck PE, so dass diesem Wärmetauscher 64 kein separates Expansionsventil vorgeschaltet ist.

Zum Schutz der Kältemittelverdichtereinheit 12 ist dem wärmeaufnehmenden Wärmetauscher 64 ein Phasenseparator 72 nachgeschaltet, welcher in einer Saugdruckleitung 74 angeordnet ist, der von der Kühlstufe 62 zum Sauganschluss 14 der Kältemittelverdichtereinheit 12 führt und verhindert, dass flüssiges Kältemittel von der Kältemittelverdichtereinheit 12 am Sauganschluss 14 angesaugt wird.

Von dem Expansionsdruckausgangsanschluss 36 strömt somit ein Expansionsmassenstrom E durch die Expansionsleitung 42 zu der Kühlstufe 62 und von der Kühlstufe 62 wiederum über die Saugdruckleitung 74 zu der Kältemittelverdichtereinheit 12.

Dabei entspricht der Expansionsmassenstrom E nicht dem Gesamtmassenstrom, sondern ist um einen Unterkühlungsmassenstrom U reduziert, der von der Expansionseinheit 32 am Hochdruckausgangsanschluss 38 bei einem Rückführungsdruck PR abgegeben wird und dem Verdichtermassenstrom V vor dessen Eintritt in den wärmeabgebenden hochdruckseitigen Wärmetauscher 22 zugeführt wird.

Die erfindungsgemäßen Kältemittelkreisläufe 10, die nachfolgend beschrieben werden, sind alle vorzugsweise für Kohlendioxid, das heißt CO₂, konzipiert, so dass bei gängigen Umgebungsbedingungen üblicherweise ein transkritischer Kreisprozess vorliegt, bei welchem lediglich vor Durchführung der Expansion des Kältemittels durch die Expansionseinheit 32 beispielsweise mittels des Wärmetauschers 22 eine Abkühlung des Kältemittels auf eine Temperatur erfolgt, die oberhalb der Tau- und Siedelinie oder Sättigungskurve verlaufenden Isothermen entspricht, so dass keine Verflüssigung des Kältemittels vorliegt.

Lediglich im Fall sehr niedriger Temperaturen zur Kühlung des hochdruckseitigen wärmeabgebenden Wärmetauschers besteht die Möglichkeit, einen subkritischen Kreisprozess durchzuführen, so dass in diesem Fall eine Kondensation des Kältemittels auf einer Temperatur erfolgt, die einer die Tauund Siedelinie oder Sättigungskurve des Kältemittels durchlaufenden Isothermen entspricht.

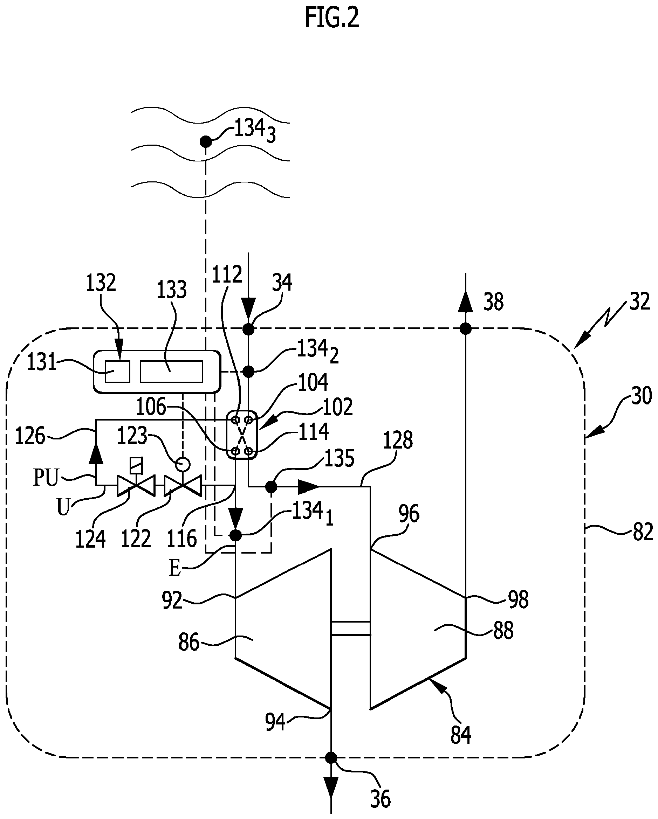

Das erste Ausführungsbeispiel der erfindungsgemäß ausgebildeten Expansionseinheit 32 umfasst, wie in Fig. 2 dargestellt, ein Expansionssystem 30, das eine als Ganzes mit 82 bezeichnete Vorrichtungsbasis, aufweist an welcher der Hochdruckeingangsanschluss 34 der Expansionsdruckausgangsanschluss 36 und der Hochdruckausgangsanschluss 38 angeordnet sind.

Ferner ist bei dem Expansionssystem 30 mit der Vorrichtungsbasis 82 eine Expansionskompressionseinheit 84 verbunden, welche einen Expander 86 und einen Kompressor 88 umfasst, die in der Expansionskompressionseinheit 84 integriert und starr miteinander gekoppelt sind.

Die Expansionskompressionseinheit 84 umfasst einen Expandereingang 92, einen Expanderausgang 94, der mit dem Expansionsdruckausgangsanschluss 36 verbunden ist, sowie einen Kompressoreingang 96 und einen Kompressorausgang 98, der seinerseits wiederum mit dem Hochdruckausgangsanschluss 38 verbunden ist.

Ferner ist bei dem Expansionssystem 30 an der Vorrichtungsbasis 82 eine Unterkühlungseinheit 102 angeordnet, die bei dem ersten Ausführungsbeispiel als Gegenstromwärmetauscher ausgebildet ist und einen Eingang 104 und einen Ausgang 106 für den zu kühlenden Massenstrom, insbesondere in diesem Fall den Gesamtmassenstrom, aufweist sowie einen Eingang 112 und einen Ausgang 114 für den als Gegenstrom durch den Wärmetauscher geführten Unterkühlungsmassenstrom U aufweist.

Der Unterkühlungsmassenstrom U wird bei dem Expansionssystem 30 an einem Abzweig 116 von dem am Ausgang 106 der Unterkühlungseinheit 102 austretenden und unterkühlten Gesamtmassenstrom G abgezweigt, so dass ein Expansionsmassenstrom E vom Abzweig 116 durch eine Zuleitung zu dem Expandereingang 92 geführt wird und der Unterkühlungsmassenstrom U durch ein Absperrorgan 124 und ein mit einem Stellmotor 123 angetriebenes Expansionsorgan 122 in der Zuleitung 126 geführt wird, in welchem der Unterkühlungsmassenstrom U auf einen Druck PU expandiert wird, und danach dem Eingang 112 der Unterkühlungseinheit 102 zugeführt wird, wobei der Unterkühlungsmassenstrom U in der Unterkühlungseinheit 102 im Gegenstrom den von dem Eingang 104 zum Ausgang 106 strömenden Gesamtmassenstrom G unterkühlt und vom Ausgang 114 mittels einer Verbindungsleitung 128 dem Kompressoreingang 96 zugeführt wird.

Die in der Expanderstufe 86 durch Expansion des Expansionsmassenstroms E frei werdende mechanische Energie wird in der Expansionskompressionseinheit 84 unmittelbar der Kompressorstufe 88 zugeführt und führt in dieser zu einem Verdichten des Unterkühlungsmassenstroms U auf einen Rückführungshochdruck PR, welcher dem Druckniveau PH1 in der Hochdruckleitung 18 entspricht oder höher als dieser ist, so dass der Unterkühlungsmassenstrom U vom Hochdrucksausgangsanschluss 38 über eine Hochdruckrückleitung 78 dem Verdichtermassenstrom V zugeführt werden kann.

Ferner ist in dem Expansionssystem 30 noch eine Steuerung 132 integriert, die einerseits mit einem Sensor 134, der insbesondere ein Temperatursensor ist, die Temperatur des Massenstroms des Kältemittels vor dessen Expansion in der Expansionsstufe 86 erfasst und entsprechend dieser Temperatur das Expansionsorgan 122 steuert.

Hierzu ist der Sensor 134 beispielsweise zwischen dem Abzweig 116 und der Expansionssufe 86 als Sensor 134₁ angeordnet.

Alternativ oder ergänzend hierzu ist aber auch der Sensor 134 als Sensor 134₂ zwischen dem Hochdruckeingangsanschluss 34 und der Unterkühlungseinheit 102 einsetzbar.

Alternativ oder ergänzend ist insbesondere vorgesehen, dass der Sensor 134 als Sensor 134s die Umgebungstemperatur misst, die insbesondere durch die den Wärmetauscher 22 durchströmende Umgebungsluft maßgeblich die Temperatur des Massenstroms des Kältemittels am Ausgang 26 des Wärmetauschers 22 beeinflusst.

Dabei dient das Expansionsorgan 122 dazu, den Unterkühlungsmassenstrom U zu steuern, und dadurch den Hochdruck PH2 am Hochdruckeingangsanschluss 34 und somit auch den Hochdruck PH2 in der Hochdruckableitung 28 entsprechend einem der Steuerung 132 vorgegebenen, insbesondere in dieser als Datei oder Algorithmus abgespeicherten Zusammenhang in Abhängigkeit von der Temperatur des Kältemittels am Sensor 134 und somit in Abhängigkeit von den Möglichkeiten zur Kühlung des auf dem Hochdruck PH2 befindlichen Kältemittels, beispielsweise in Abhängigkeit von der zur Kühlung im Wärmetauscher 22 vorliegenden Umgebungstemperatur, zu regeln.

Die Steuerung 132 umfasst insbesondere einen Prozessor 133 und einen Speicher 131, in dem ein Algorithmus oder eine Korrelationstabelle gespeichert sind, durch welche eine Korrelation zwischen den Einstellungen des Expansionsorgans 122 mit von dem Sensor 134 gemessenen Temperaturen gespeichert ist, so dass die Einstellungen des Expansionsorgans 122 vorgenommen durch den von der Steuerung 132 angesteuerten Stellmotor 123, dazu führen dass sich am Hochdruckeingangsanschluss 34 und/oder am Eingang 104 der Unterkühlungseinheit 102 und/oder am Expandereingang 92 der der Temperatur entsprechende Hochdruck PH2 einstellt.

Die Regelung des Hochdrucks PH2 durch Steuerung des Unterkühlungsmassenstroms U ist möglich, da durch die mechanische funktionale Kopplung des Expanders 86 mit dem Kompressor 88 der Expansionsmassenstrom E direkt gemäß einem festen Volumenverhältnis mit dem Unterkühlungsmassenstrom korreliert ist, so dass durch Vorgabe des Unterkühlungsmassenstrom U der Expansionsmassenstrom E vorgebbar ist. Üblicherweise umfasst der Unterkühlungsmassenstrom U ungefähr 15 % bis 35 % des Gesamtmassenstroms G, so dass der Expansionsmassenstrom E ungefähr 85 % bis 65 % des Gesamtmassenstroms G umfasst.

Insbesondere erfolgt die Regelung des Hochdrucks PH2 so, dass in der Unterkühlungseinheit 102 die Temperatur des Gesamtmassenstroms G an der heißen Seite, also am Eingang 104, nur wenige Kelvin, beispielsweise weniger als 4 Kelvin, noch besser weniger als 3 Kelvin, insbesondere ein bis zwei Kelvin, über der Temperatur des Unterkühlungsmassenstroms U am Ausgang 114 der Unterkühlungseinheit 102 liegt, um das Kältemittel im Unterkühlungsmassenstrom U im Wesentlichen vollständig zu verdampfen.

Um gegebenenfalls die Temperatur des Unterkühlungsmassenstroms U am Ausgang 114 zuverlässig überwachen zu können, ist insbesondere noch in der Verbindungsleitung 128 ein mit der Steuerung 132 verbundener Sensor 135 vorgesehen.

Durch die Anordnung der Steuerung 132, des Expansionsorgans 122, der Unterkühlungseinheit 102 und der Expansionskompressionseinheit 84 an der Vorrichtungsbasis 82 bildet diese insgesamt eine selbständig in dem Kühlkreislauf 10 montierbare Einheit, welche durch Regelung des Hochdrucks, der ausgangsseitig des wärmeabgebenden Wärmetauschers 22 vorliegt, die Betriebszustände des Kältemittelkreislaufs 10 regelt.

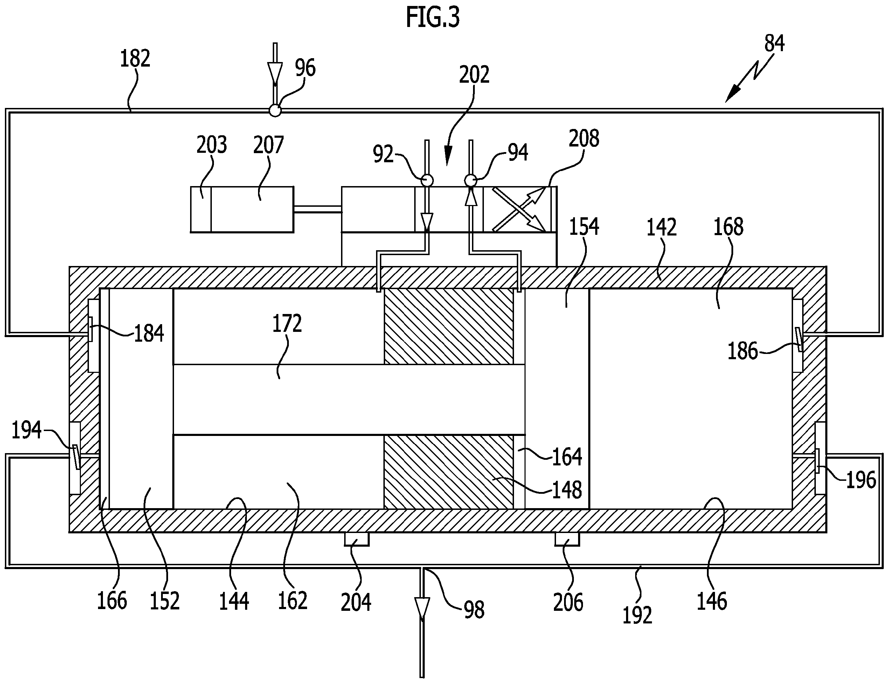

Wie in Fig. 3 dargestellt, ist die als Ganzes mit 84 bezeichnete Expansionskompressionseinheit als Freikolbenmaschine ausgebildet, die ein Zylindergehäuse 142 aufweist, in welchem zwei voneinander getrennte Kolbenkammern 144 und 146 angeordnet sind, wobei in jeder Kolbenkammer ein bewegbarer Freikolben 152, 154 angeordnet ist.

Die Freikolben 152 und 154 unterteilen dabei die jeweiligen Kolbenkammern 144 und 146 in Expansionskammern 162 und 164 sowie Kompressionskammern 166 und 168.

Ferner sind die Freikolben 152 und 154 vorzugsweise mechanisch miteinander gekoppelt, und zwar so, dass bei maximalem Volumen der ersten Expansionskammer 162 der erste Kolben 152 so steht, dass die erste Kompressionskammer 166 ein minimales Volumen aufweist und gleichzeitig der zweite Freikolben 154 so steht, dass dessen Expansionskammer 164 ein minimales Volumen aufweist, während die Kompressionskammer 168 das maximale Volumen aufweist oder umgekehrt.

Somit führt beispielsweise eine Volumenzunahme der ersten Expansionskammer 162 dann, wenn diese durch den Hochdruck am Expandereingang 92 beaufschlagt ist, zu einem Verdichten von Kältemittel des Unterkühlungsmassenstroms U in der ersten Kompressionskammer 166, gleichzeitig zu einem Ausschieben des Kältemittels in der zweiten Kompressionskammer 168 in Richtung des Expanderausgangs 94 und zu einem Ansaugen von Kältemittel in der zweiten Kompressionskammer 168 über den Kompressoreingang 96.

Umgekehrt führt eine Beaufschlagung der zweiten Expansionskammer 164 durch über den Expandereingang 92 zugeführtes auf Hochdruck befindliches Kältemittel zu einem Verdichten des Kältemittels in der zweiten Kompressionskammer 168 und somit einem Ausschieben desselben zum Kompressorausgang 98, während gleichzeitig ein Ausschieben des Kältemittels in der ersten Expansionskammer 162 in Richtung des Expanderausgangs 94 erfolgt und ein Ansaugen von Kältemittel in der ersten Kompressionskammer 166 über den Kompressoreingang 96 erfolgt.

Vorzugsweise sind dabei der erste Freikolben 152 und der zweite Freikolben 154 koaxial zueinander angeordnet und bewegen sich in ebenfalls koaxial zueinander angeordneten Kolbenkammern 144 und 146 die durch einen Trennkörper 148 voneinander getrennt sind, wobei der Trennkörper 148 von einem Kopplungselement 172 abgedichtet durchsetzt ist, welches die Bewegung der beiden Freikolben 152 und 154 koppelt.

Im einfachsten Fall kann dabei das Kopplungselement 172 als den Trennkörper 148 durchsetzende und sich mit den Freikolben 152, 154 mitbewegende Kopplungsstange ausgebildet sein, welche jeweils an den Freikolben 152 und 154 frei anliegt, also nicht mit diesen fest verbunden ist.

Dadurch, dass beim Einströmen von Kältemittel über den Expandereingang 92 der Druck in dieser Expansionskammer 162 beziehungsweise 164 auf den jeweiligen Freikolben 152 beziehungsweise 154 wirkt und gleichzeitig in der jeweiligen Kompressionskammer 168 beziehungsweise 166 des jeweils anderen Freikolbens 154 beziehungsweise 152 ein Druck wirkt, der höher ist als der Druck am Expanderausgang 94, der in der jeweiligen Expansionskammer 164 beziehungsweise 162 vorliegt, lässt sich in der durch den Freikolben 152 beziehungsweise 154 beaufschlagten Kompressionskammer 166 beziehungsweise 168 ein Druck erzeugen, der höher ist als der am Expandereingang 92 anliegende Hochdruck, so dass sich der Unterkühlungsmassenstrom U auf einen am Kompressorausgang 98 anliegenden Druck verdichten lässt, der mindestens dem Hochdruck PH1 am Eingang 24 des wärmeabgebenden Wärmetauschers oder dem Druck in der Hochdruckleitung 18 entspricht, obwohl der Hochdruck PH2, der Expandereingang zur Verfügung steht aufgrund von Druckverlusten im Wärmetauscher 22 etwas kleiner als der Hochdruck PH1 ist.

Zur Verbindung der Kompressionskammern 166 und 168 mit dem Kompressoreingang 96 sind vom Kompressoreingang 96 ausgehende Zuleitungen 182 vorgesehen, die zu den Kompressionskammern 166 und 168 zugeordneten Einlassventilen 184 und 186 führen und außerdem ist der Kompressorausgang 98 mit einer Druckleitung 192 verbunden, die von den Kompressionskammern 166 beziehungsweise 168 zugeordneten Auslassventilen 194 und 196 zu dem Kompressorausgang 98 führt.

Eine wechselweise Verbindung zwischen dem Expandereingang 92 und dem Expanderausgang 94 mit den Expansionskammern 162 und 164 erfolgt über ein Schiebersystem 202, welches kolbenpositionsgesteuert ist.

Beispielsweise umfasst das Schiebersystem 202 eine Steuerung 203, die mittels Positionssensoren 204 und 206 die Stellungen der Freikolben 152 beziehungsweise 154 erfasst und mittels eines elektrischen Antriebs 207 einen als Ganzes mit 208 bezeichneten Wechselschieber steuert, der zwei Schieberstellungen aufweist und in der einen Schieberstellung den Expandereingang 92 mit der Expansionskammer 162 und den Expanderausgang 94 mit der Expansionskammer 164 und in der anderen Schieberstellung den Expandereingang mit der Expansionskammer 164 und den Expanderausgang 94 mit der Expansionskammer 162 verbindet.

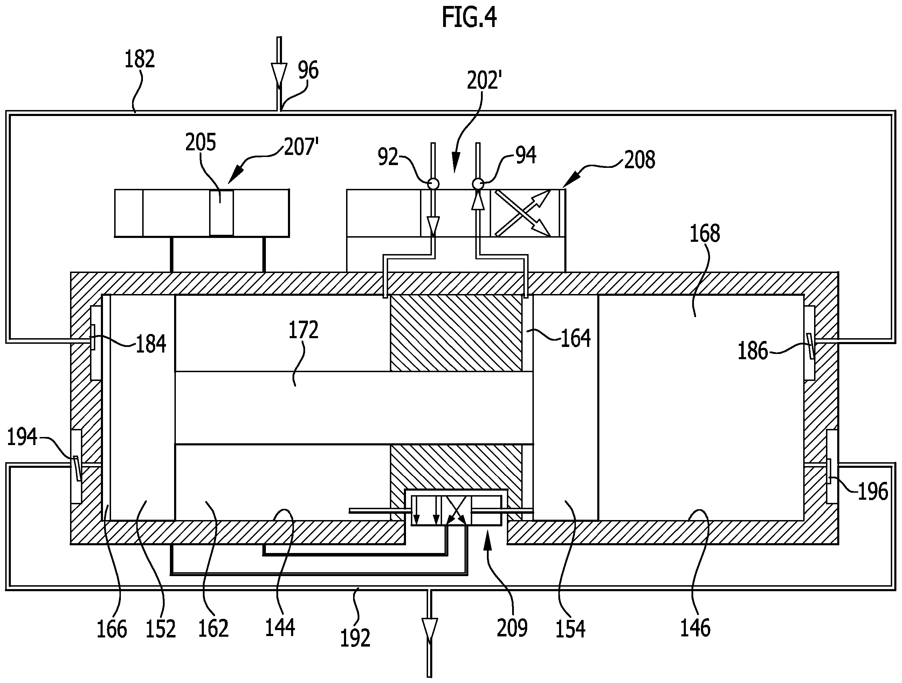

Alternativ dazu ist, wie in Fig. 4 darstellt, bei einem Schiebersystem 202' eine Drucksteuerung des Wechselschiebers 208 vorgesehen, wobei der Antrieb 207' einen druckgetriebenen Zylinder mit einem Kolben 205 aufweist, welcher gesteuert durch einen Hilfsschieber 209 wechselweise einerseits mit dem Druck am Expandereingang 92 und andererseits mit dem Druck am Expanderausgang 94 oder umgekehrt beaufschlagt wird, wobei der Hilfsschieber 209 ebenfalls als Wechselschieber ausgebildet ist und dessen Schieberpositionen durch mechanische Erfassung der Positionen der Freikolben 152 und 154 in ihren dem Trennkörper 148 zugewandten Endstellungen erfolgt.

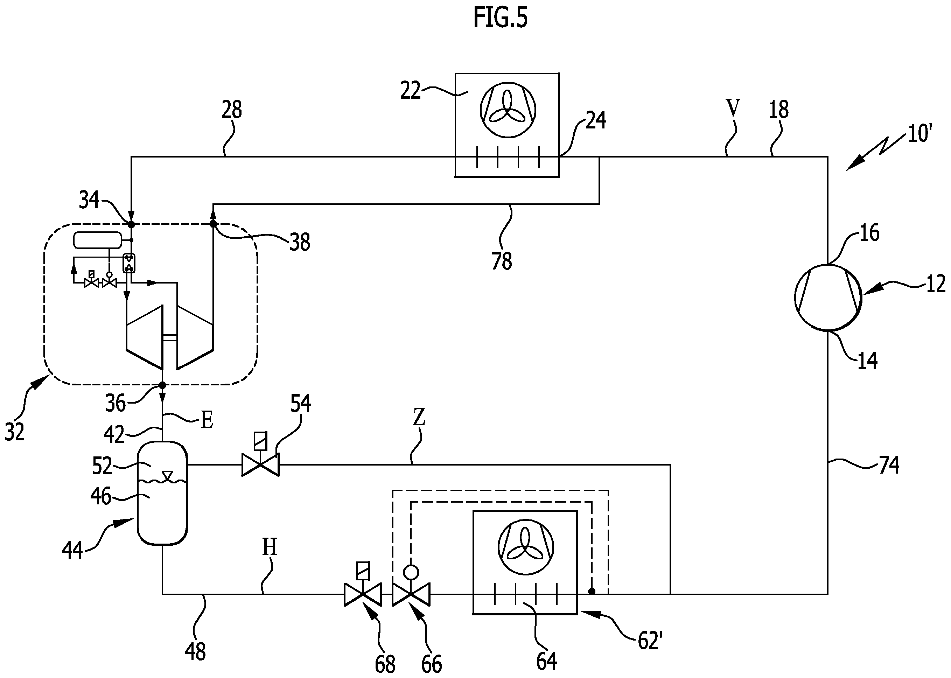

Bei einem zweiten Ausführungsbeispiel eines erfindungsgemäßen Kältemittelkreislaufs 10', dargestellt in Fig. 5, sind diejenigen Elemente, die mit denen des ersten Ausführungsbeispiels identisch sind, mit denselben Bezugszeichen versehen, so dass hinsichtlich der Beschreibung vollinhaltlich auf die Ausführungen zu diesen im Zusammenhang mit dem ersten Ausführungsbeispiel verwiesen werden kann.

Im Gegensatz zum ersten Ausführungsbeispiel führt bei dem zweiten Ausführungsbeispiel die Expansionsleitung 42 nicht unmittelbar zu der Kühlstufe 62, sondern zu einem Zwischendrucksammler 44, in welchem sich bei Expansionsdruck PE ein Bad 46 aus flüssigem Kältemittel ausbildet, von welchem flüssiges Kältemittel über eine Flüssigleitung 48 der Kühlstufe 62' zugeführt wird, die in diesem Fall nicht nur den wärmeaufnehmenden Wärmetauscher 64 umfasst, sondern zusätzlich noch ein Abschaltorgan 68 und ein Expansionsorgan 66.

Ferner bildet sich über dem Bad 46 ein Gasvolumen 52, von welchem ein Zusatzmassenstrom Z über ein Expansionsorgan 54 der Saugleitung 74 zugeführt wird.

Durch den Zwischendrucksammler 44 besteht die Möglichkeit, den Expansionsmassenstrom E bei Expansionsdruck PE in einen Hauptmassenstrom H, der über die Flüssigkeitsleitung der Kühlstufe 62' zugeführt wird, und einen gasförmigen Zusatzmassenstrom Z, der über das Expansionsorgan 54 der Saugdruckleitung 74 zugeführt wird, aufzuteilen.

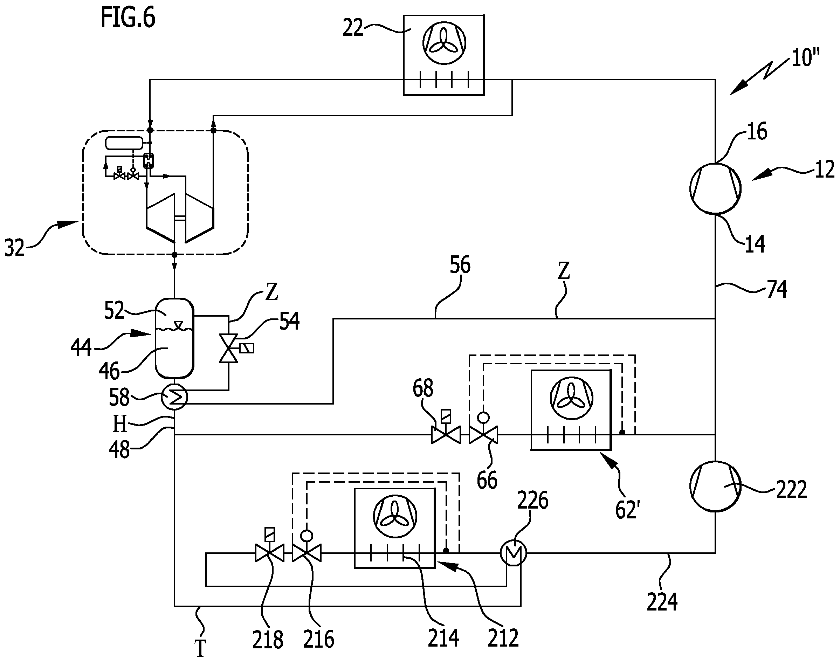

Bei einem dritten Ausführungsbeispiel eines erfindungsgemäßen Kältemittelkreislaufs 10", dargestellt in Fig. 6, sind diejenigen Elemente, die mit denen des ersten und zweiten Ausführungsbeispiels identisch sind, mit denselben Bezugszeichen versehen, so dass hinsichtlich der Beschreibung derselben vollinhaltlich auf die Ausführungen zum ersten und zweiten Ausführungsbeispiel Bezug genommen werden kann.

Im Gegensatz zum zweiten Ausführungsbeispiel wird der Zusatzmassenstrom Z aus dem Gasvolumen 52 über das Expansionsorgan 54 nicht direkt der Saugdruckleitung 74 zugeführt, sondern nochmals durch einen in der Flüssigkeitsleitung 48 vorgesehenen Unterkühler 58 geführt, der den in der Flüssigkeitsleitung 48 strömenden Hauptmassenstrom H nochmals unterkühlt.

Zusätzlich ist die Kühlstufe 62' beispielsweise als Normalkühlstufe ausgebildet und zusätzlich ist noch eine Tiefkühlstufe 212 vorgesehen, welche einen wärmeaufnehmenden Wärmetauscher 214 sowie ein Abschaltorgan 218 und ein Expansionsorgan 216 aufweist.

Das in der Tiefkühlstufe 212 expandierte Kältemittel wird über eine Saugdruckleitung 224 einer Tiefkühlverdichtereinheit 222 zugeführt, die das Kältemittel wieder soweit verdichtet, dass dieses der Saugdruckleitung 74 für die Kältemittelverdichtereinheit 12 zum Verdichten auf Hochdruck zugeführt werden kann.

Darüber hinaus ist vorzugsweise in der Saugdruckleitung 224 der Tiefkühlverdichtereinheit 212 noch ein Unterkühler 226 vorgesehen, der das über die Flüssigkeitsleitung 48 der Tiefkühlstufe 212 zugeführte Kältemittel vor Eintritt in die Tiefkühlstufe 212 nochmals unterkühlt und zwar durch das aus der Tiefkühlstufe 212 austretende und in der Saugdruckleitung 224 geführte expandierte Kältemittel.

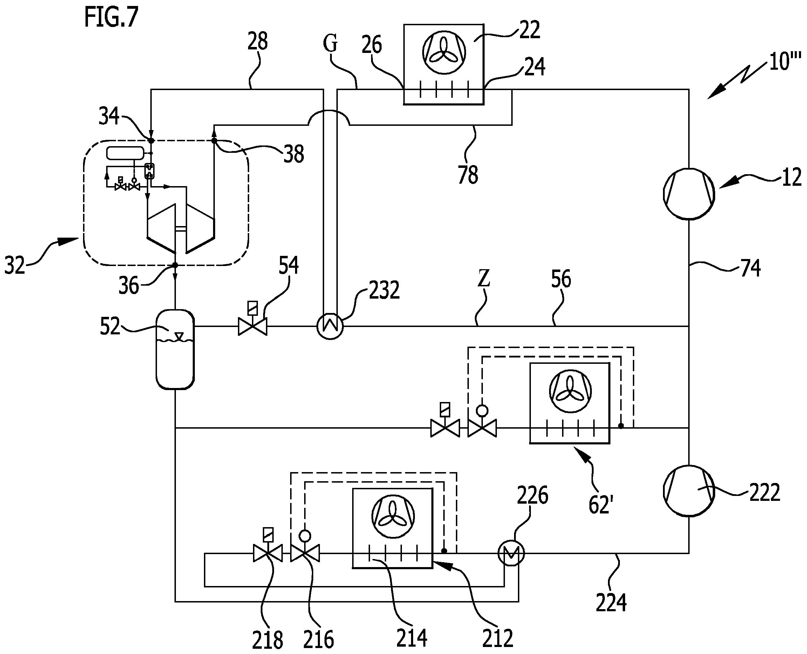

Bei einem vierten Ausführungsbeispiel eines erfindungsgemäßen Kältemittelkreislaufs 10"', dargestellt in Fig. 7, sind diejenigen Elemente, die mit denen der voranstehenden Ausführungsbeispiele, insbesondere denen des dritten Ausführungsbeispiels identisch sind, mit denselben Bezugszeichen versehen, so dass hinsichtlich der Beschreibung vollinhaltlich auf die Ausführungen zu den voranstehenden Ausführungsbeispielen Bezug genommen werden kann.

Insbesondere ist im Gegensatz zum dritten Ausführungsbeispiel bei dem vierten Ausführungsbeispiel der aus dem Gasvolumen 52 austretende und durch das Expansionsorgan 54 expandierte Zusatzmassenstrom Z durch einen Wärmetauscher 232 geführt, welcher den aus dem wärmeabgebenden Wärmetauscher 22 austretenden und in der Hochdruckableitung 28 geführten Gesamtmassenstrom G, der ebenfalls durch diesen Wärmetauscher 232 geführt ist, nochmals zusätzlich unterkühlt, bevor dieser über den Hochdruckeingangsanschluss 34 in die Expansionseinheit 32 eintritt.

Damit kann der Zusatzmassenstrom Z noch dazu ausgenutzt werden, den Gesamtmassenstrom G vor dessen Eintritt in den Hochdruckeingangsanschluss 34 der Expansionseinheit 32 zusätzlich zu unterkühlen.

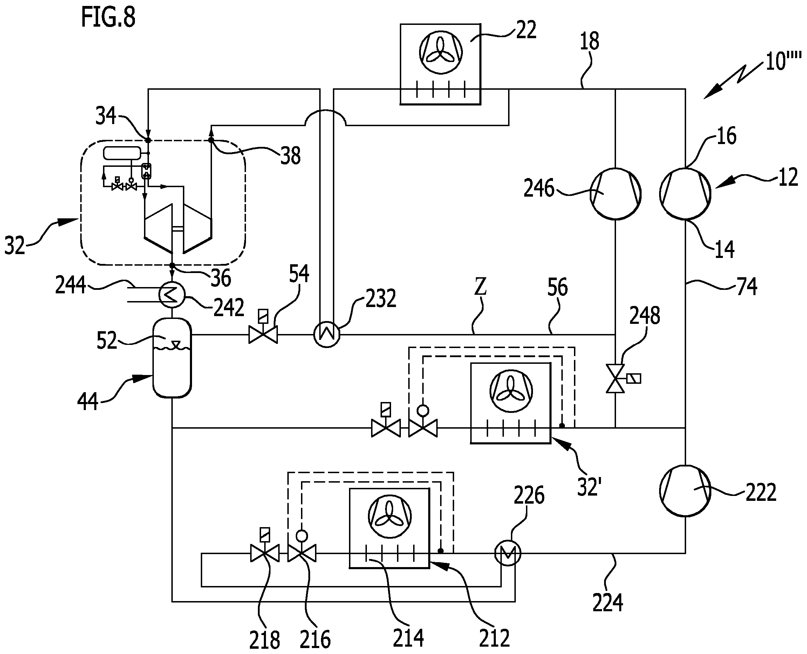

Bei einem fünften Ausführungsbeispiel eines erfindungsgemäßen Kältemittelkreislaufs 10"", dargestellt in Fig. 8, sind ebenfalls diejenigen Elemente, die mit denen der voranstehenden Ausführungsbeispielen identisch sind, mit denselben Bezugszeichen versehen, so dass auf die Beschreibung derselben im Zusammenhang mit den voranstehenden Ausführungsbeispielen, insbesondere dem vierten Ausführungsbeispiel Bezug genommen werden kann.

Bei diesem fünften Ausführungsbeispiel ist zwischen dem Expansionsdruckausgangsanschluss 36 und dem Zwischendrucksammler 44 noch ein Wärmetauscher 242 angeordnet, welcher dazu dient, einen Kältemittelkreislauf einer Klimaanlage 244 zu kühlen.

In diesem Fall ist vorzugsweise vorgesehen, dass die Leitung 56 nicht in die Saugleitung 74 der Kältemittelverdichtereinheit 12 mündet, sondern mit einem Zusatzverdichter 246 verbunden ist, welcher bei dem durch den Wärmetauscher 242 erhöhten Zusatzmassenstrom diesen auf Hochdruck verdichtet.

Ferner kann die Leitung 56 auch noch über ein Expansionsorgan 248 mit der Saugdruckleitung 74 verbunden sein.

Insbesondere für den Fall, dass ein Betrieb des Zusatzverdichters 246 nicht notwendig ist, ist das Expansionsorgan 248 vorgesehen, welches die Leitung 56 mit der Saugdruckleitung 74 der Kältemittelverdichtereinheit 12 verbindet.

Bei den bislang beschriebenen Ausführungsbeispielen wurde lediglich eine Expansionseinheit 32 eingesetzt.

Jede Expansionseinheit 32 hat aufgrund der starren funktionalen Kopplung der Expanderstufe 86 mit der Kompressorstufe 88 ein definiertes Volumenverhältnis der Expanderstufe zur Kompressorstufe. Das heißt, dass das in der jeweiligen Kompressorstufe 88 verdichtete Volumen streng korreliert ist zu dem in der jeweiligen Expanderstufe 86 expandierten Volumen.

Diese strenge Korrelation ermöglicht es auch über die Steuerung des Unterkühlungsmassenstroms U auch den Expansionsmassenstrom E proportional zum Unterkühlungsmassenstrom U zu steuern und somit ist weder zwischen dem hochdruckseitigen wärmeabgebenden Wärmetauscher 22 und der Expansionsstufe 86 und insbesondere auch nicht zwischen der Unterkühlungseinheit 102 und der Expansionsstufe 86 ein druckminderndes Drosselorgan notwendig, um den Expansionsmassenstrom E, der in erster Linie für den hochdruckseitigen Druck, insbesondere den Druck in der Hochdruckableitung 28 und insbesondere auch den Druck am Hochdruckeingangsanschluss 34 maßgebend ist, aufrecht zu erhalten.

Vielmehr erfolgt eine Steuerung des Expansionsmassenstroms E über das den Unterkühlungsmassenstrom U beeinflussende Expansionsorgan 122, welches den Unterkühlungsmassenstrom U festlegt, der wiederum allerdings über die starre funktionale Kopplung zwischen der Kompressionsstufe 88 und der Expansionsstufe 86 auch den Expansionsmassenstrom E festlegt.

Allerdings ist in Abhängigkeit vom Hochdruck PH2, insbesondere in Abhängigkeit vom jeweiligen Hockdruckniveau, eine Variation des Volumenverhältnisses der Expansionseinheit 32 vorteilhaft, um die Effizienz derselben möglichst optimal zu halten.

Eine Variation des Volumenverhältnisses ist jedoch bei der erfindungsgemäß verwendeten Expansionskompressionseinheit 84 nicht realisierbar.

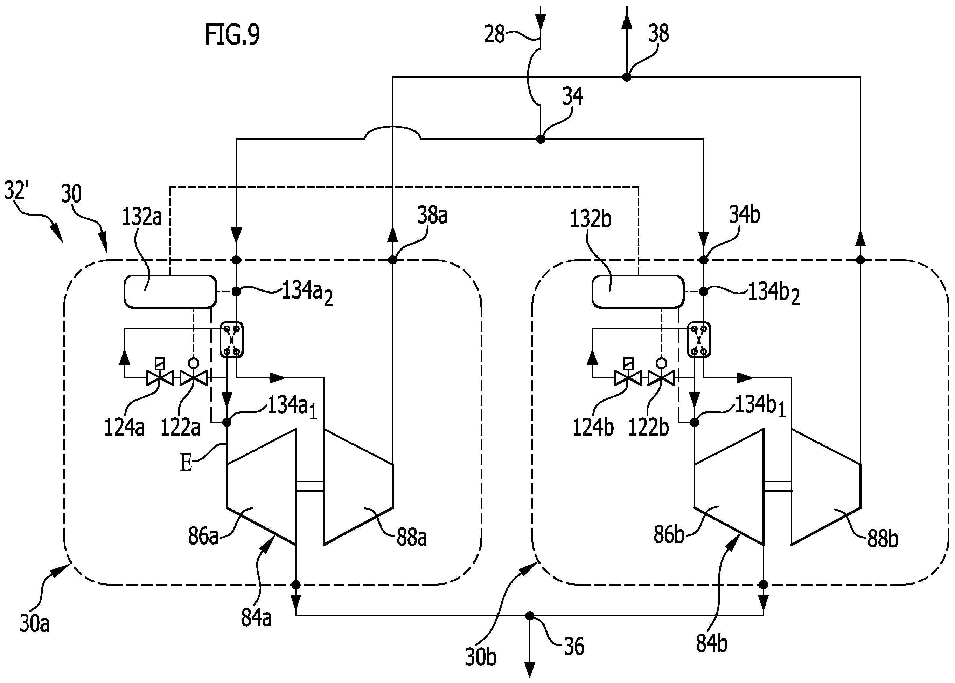

Aus diesem Grund ist bei einem zweiten Ausführungsbeispiel der Expansionseinheit 32', dargestellt in Fig. 9, vorgesehen, dass parallel geschaltete Expansionssysteme 30a und 30b eingesetzt sind.

Beispielsweise ist das erste Expansionssystem 30a hinsichtlich seines Volumenverhältnisses so ausgelegt, dass dieses für ein hohes Hochdruckniveau optimiert ist, während das zweite Expansionssystem 30b für ein niedrigeres Hochdruckniveau hinsichtlich ihres Volumenverhältnisses optimiert ist.

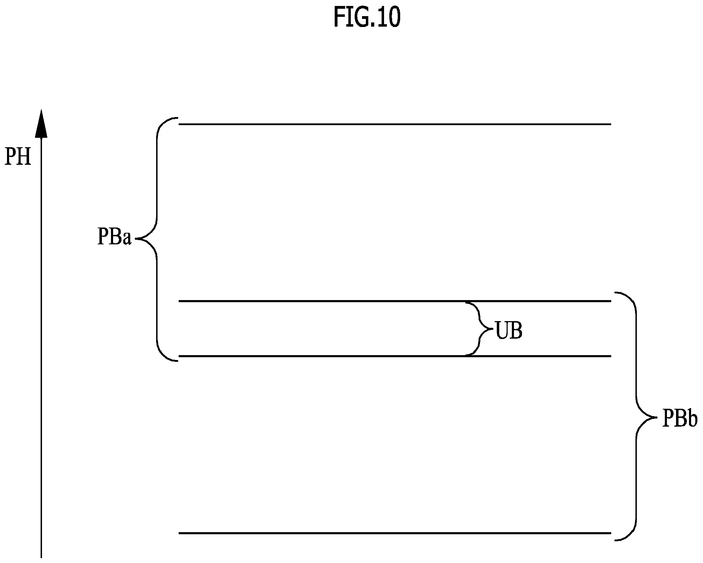

In diesem Fall sind allerdings die Steuerungen 132 miteinander zu koppeln, wobei beispielsweise die Steuerung 132a in einem Bereich mit hohem Hochdruckniveau wirksam ist, während die Steuerung 132b in einem Bereich mit niedrigem Hochdruckniveau wirksam ist, wobei beide Bereiche aneinander anschließen oder auch überlappen können, wie beispielsweise in Fig. 10 dargestellt.

Beispielsweise arbeitet das erste Expansionssystem 30a in einem Druckbereich PBa und das zweite Expansionssystem 30b in einem Druckbereich PBb, wobei die Druckbereiche PBa und PBb beispielsweise so gewählt sind, dass sie sich überlappen so dass in einem Überlappungsbereich UB beide Expansionssysteme 30a und 30b wirksam sind.

Somit lässt sich bei diesem Ausführungsbeispiel sowohl bei einem oberen Hochdruckniveau, beispielsweise entsprechend einem transkritischen Betrieb, als auch bei einem niedrigen Hochdruckniveau, beispielsweise entsprechend einem subkritischen Betrieb, eine möglichst effiziente Expansion des Kältemittels durch die Expansionssysteme 30a und 30b durchführen.

Dabei liegt das Volumenverhältnis des zweiten Expansionssystems 30b beispielsweise im Bereich zwischen dem 0,7-fachen und dem 0,9-fachen des Volumenverhältnisses des ersten Expansionssystem 30a, vorzugsweise im Bereich zwischen dem 0,8-fachen und dem 0,9-fachen des Volumenverhältnisses des ersten Expansionssystems 30a.

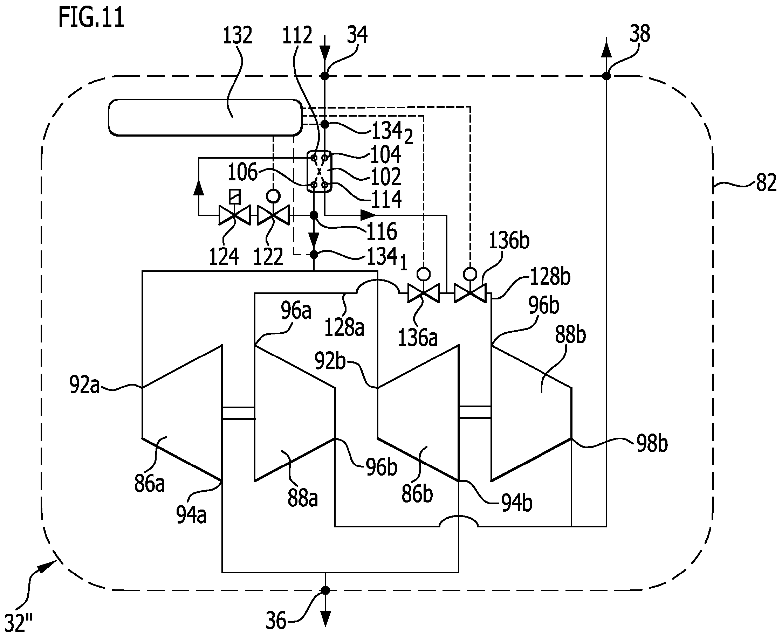

Bei einem dritten Ausführungsbeispiel einer erfindungsgemäßen Expansionseinheit 32", dargestellt in Fig. 11 sind in derselben Expansionseinheit 32", und zwar an derselben Vorrichtungsbasis 82 zwei Expansionskompressionseinheiten 84a und 84b vorgesehen, bei welchen das Volumenverhältnis zwischen der Expanderstufe 86a beziehungsweise 86b und der Kompressorstufe 88a beziehungsweise 88b unterschiedlich groß ist.

Allerdings ist in der Expansionseinheit 32" nur eine Unterkühlungseinheit 102 vorgesehen, durch welche der Gesamtmassenstrom G hindurchtritt und die zwei Expansionskompressionseinheiten 84a und 84b sind zwischen dem Abzweig 116 und dem Expansionsdruckausgangsanschluss 36 parallel geschaltet.

In den zu den Kompressoreingängen 96a und 96b führenden Ästen 128a und 128b der Verbindungsleitung 128 ist jeweils ein durch die Steuerung 132 steuerbares Absperrorgan 136a beziehungsweise 136b vorgesehen ist, so dass die Expansionskompressionseinheiten 84a und 84b über den den Kompressorstufen 88a und 88b anteilmäßig zugeführten Unterkühlungsmassenstrom U steuerbar sind. Beispielsweise kann entsprechend dem Niveau des Hochdrucks PH2 die Steuerung 132 entweder die für ein hohes Hochdruckniveau vorgesehene erste Expansionskompressionseinheit 84a einsetzen kann oder die für ein niedriges Hochdruckniveau vorgesehene zweite Expansionskompressionseinheit 84b einsetzen oder gegebenenfalls beide Expansionskompressionseinheiten 84 anteilmäßig zur Expansion des Expansionsmassenstroms E und Kompression des Unterkühlungsmassenstroms U einsetzen.

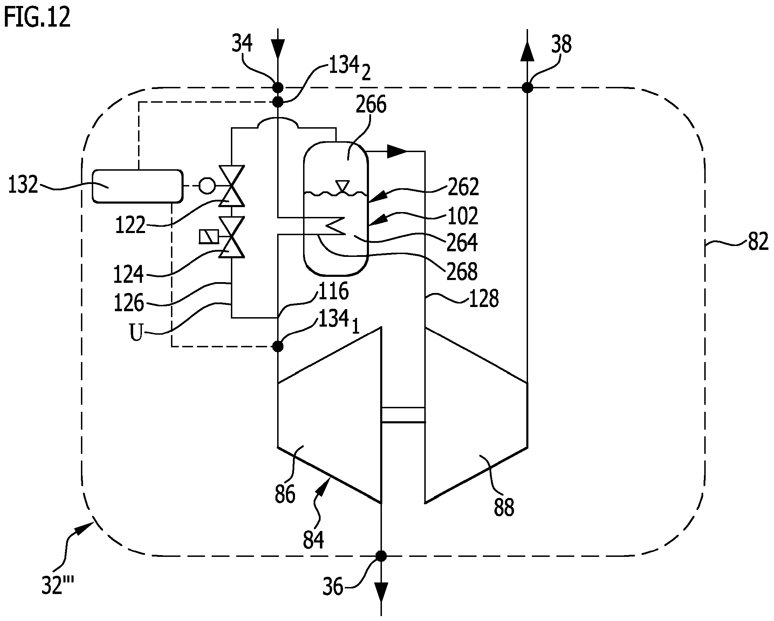

Bei einem vierten Ausführungsbeispiel einer erfindungsgemäßen Expansionseinheit 32''', dargestellt in Fig. 12 sind diejenigen Elemente, die mit denen der voranstehenden Ausführungsbeispiele identisch sind, mit denselben Bezugszeichen versehen, so dass diesbezüglich vollinhaltlich auf die Ausführungen zu diesen Ausführungsbeispielen Bezug genommen wird.

Im Gegensatz zu diesen Ausführungsbeispielen ist bei dem vierten Ausführungsbeispiel die Unterkühlungseinheit 102 als Sammelbehälter 262 ausgebildet, welchem der durch das Expansionsorgan 122 gekühlte Unterkühlungsmassenstrom U zugeführt wird und ein Bad 264 aus flüssigem Kältemittel sowie ein über diesem stehendes Gasvolumen 266 ausbildet, das von der Verbindungsleitung 128 der Kompressorstufe 88 zugeführt wird.

In dem Flüssigkeitsbad 264 verläuft ein den Gesamtmassenstrom G führendes Element 268, welches den Gesamtmassenstrom G unterkühlt, bevor dieser zu dem Abzweig 116 und der Expansionskompressionseinheit 84 strömt, so dass eine Unterkühlung des Gesamtmassenstroms G auf die Temperatur des Flüssigkeitsbades 264 erfolgt.

Vorzugsweise ist der Sammelbehälter 262 noch mit einer Ölabscheidung und einer Ölrückführung versehen.

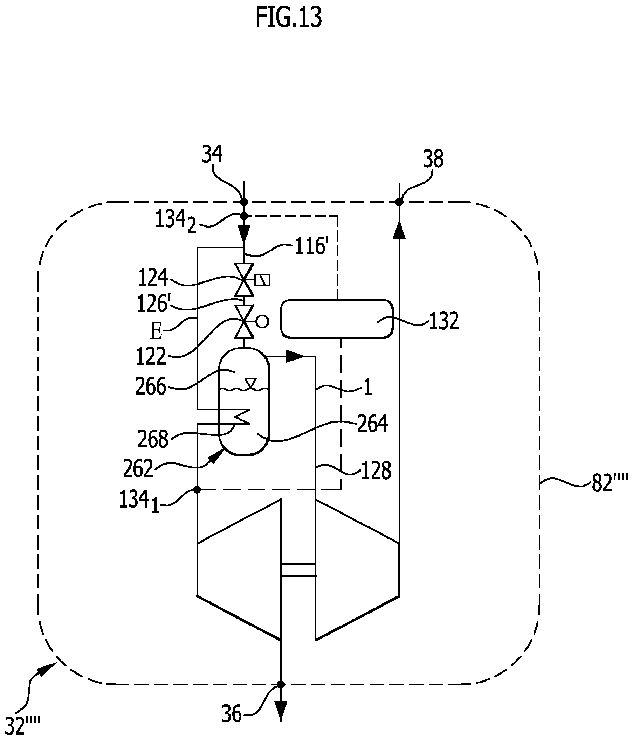

Bei einem fünften Ausführungsbeispiel einer erfindungsgemäßen Expansionseinheit 32"", dargestellt in Fig. 13, sind ebenfalls diejenigen Elemente, die mit denen der voranstehenden Ausführungsbeispiele identisch sind, mit denselben Bezugszeichen versehen, so dass auf die Ausführungen zu den voranstehenden Ausführungsbeispielen Bezug genommen wird.

Im Gegensatz zum vierten Ausführungsbeispiel liegt der Abzweig 116' zwischen dem Hochdruckeingangsanschluss 34 und dem Sammelbehälter 262 so dass über die vom Abzweig 116' in den Sammelbehälter 262 führende Zuleitung 126' mit dem Expansionsorgan 122 der Unterkühlungsmassenstrom U bereits von dem Element 268 abgezweigt wird und durch das Element 268 keine Unterkühlung vor der Expansion erfährt.

Bei diesem Ausführungsbeispiel erfolgt die Temperaturmessung mittels des Sensors 134 beispielsweise vor dem Abzweig 116'.

Bei einem sechsten Ausführungsbeispiel einer erfindungsgemäßen Expansionseinheit 32‴ʺ sind diejenigen Elemente, die mit den voranstehenden Ausführungsbeispielen identisch sind, mit denselben Bezugszeichen versehen, so dass diesbezüglich auf die Ausführungen zu den voranstehenden Ausführungsbeispielen verwiesen werden kann.

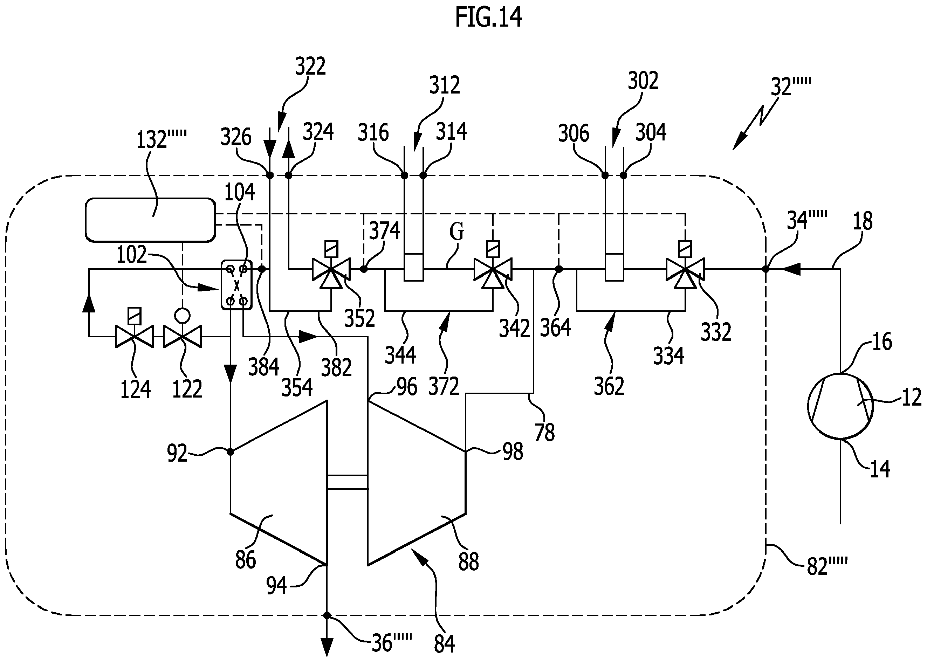

Bei dem sechsten Ausführungsbeispiel einer erfindungsgemäßen Expansionseinheit 32‴ʺ, dargestellt in Fig. 14, ist der Hochdruckeingangsanschluss 34‴ʺ unmittelbar mit der von der Kältemittelverdichtereinheit 12 kommenden Hochdruckleitung 18 verbunden.

Ferner sind zwischen dem Hochdruckeingangsanschluss 34‴ʺ und dem Eingang 104 der Unterkühlungseinheit 102 an der Vorrichtungsbasis mehrere Anschlusssätze 302, 312 und 322 vorgesehen, wobei jeder Anschlusssatz 302, 312, 322 einen Zulaufanschluss 304, 314, 324 und einen Rücklaufanschluss 306, 316, 326 aufweist, so dass an jeden dieser Anschlusssätze 302, 312, 322 jeweils ein in Fig. 14 nicht dargestellter Wärmetauscher anschließbar ist.

Ferner ist an der Vorrichtungsbasis 82 für jeden der Anschlusssätze 302, 312, 322 noch jeweils ein Dreiwegeventil 332, 342, 352 und Überbrückung 334, 344, 354 vorgesehen, wobei das Dreiwegeventil 332, 342, 352 und die jeweilige Überbrückung 334, 344, 354 es ermöglichen, intern in der Expansionseinheit 32‴ʺ den jeweiligen Anschlusssatz 302, 312, 322 zu überbrücken.

Somit besteht mit dem jeweiligen Dreiwegeventil 332, 342, 352 die Möglichkeit, den Anteil des Verdichtervolumenstroms V, der über den jeweiligen Anschlusssatz 302, 312, 322 zu dem jeweils mit diesem Anschlusssatz 302, 312, 322 verbundenen Wärmetauscher strömt und den Anteil des Verdichtervolumenstroms, der durch die jeweilige Überbrückung 334, 344, 354 strömt festzulegen.

Im Extremfall besteht mit dem jeweiligen Dreiwegeventil 332, 342, 352 die Möglichkeit, den gesamten Verdichtervolumenstrom V zu dem mit dem jeweiligen Anschlusssatz 302, 312, 322 verbundenen Wärmetauscher strömen zu lassen oder durch die jeweilige Überbrückung 334, 344, 354 strömen zu lassen.

Der jeweilige Anschlusssatz 302, 312, 322, das diesem jeweils zugeordnete Dreiwegeventil 332, 342, 352 und die dem jeweiligen Anschlusssatz 302, 312, 322 zugeordnete Überbrückung 334, 344, 354 bilden jeweils insgesamt eine Wärmetauscheranschlusseinheit 362, 372 beziehungsweise 382, wobei die Wärmetauscheranschlusseinheiten 362, 372, 382 in Reihe geschaltet aufeinanderfolgend angeordnet sind, so dass beispielsweise ausgehend von dem Hochdruckeingangsanschluss 34‴ʺ zunächst die Wärmetauscheranschlusseinheit 362, dann die Wärmetauscheranschlusseinheit 372 und dann die Wärmetauscheranschlusseinheit 382 durchströmt wird.

Ferner sind ausgangsseitig der jeweiligen Wärmetauscheranschlusseinheit 362, 372, 382 jeweils Sensoren 364, 374 und 384 angeordnet, die mit der Steuerung 132‴ʺ verbunden sind, so dass die Steuerung 132‴ʺ beispielsweise in der Lage ist, jeweils die Temperatur des Verdichtermassenstroms V ausgangsseitig der Wärmetauscheranschlusseinheiten 362, 372 und 382 zu messen und über eine entsprechende Ansteuerung des Dreiwegeventils 332, 342, 352 zu steuern, inwieweit der jeweilige mit dem Anschlusssatz 302, 312, 322 verbundene Wärmetauscher durchströmt werden soll oder nicht.

Der hochdruckseitige wärmeabgebende Wärmetauscher 22 kann mit jedem der Anschlusssätze 302, 312, 322 verbunden sein. Vorzugsweise ist der wärmeabgebende hochdruckseitige Wärmetauscher 22 jedoch mit dem Anschlusssatz 322 verbunden und liegt somit unmittelbar vor dem Eingang 104 der Unterkühlungseinheit 102, wobei der diesem zugeordnete Sensor 384 vorzugsweise die Temperatur am Eingang 104 der Unterkühlungseinheit 102 erfasst.

Ferner ist der Kompressorausgang 98 der Expansionskompressionseinheit 84 vorzugsweise über die nun bei diesem Ausführungsbeispiel an der Vorrichtungsbasis 82 angeordnete Hochdruckrückleitung 78 mit einem Eingang einer der Wärmetauscheranschlusseinheiten 362, 372 oder 382 verbunden, so dass die stromabwärts angeordneten Wärmetauscheranschlusseinheiten, im dargestellten Fall die Wärmetauscheranschlusseinheiten 372, 382 ebenfalls von dem Unterkühlungsmassenstrom U durchsetzt werden, der sich zu dem Verdichtermassenstrom V addiert und den Gesamtmassenstrom G bildet.

Das sechste Ausführungsbeispiel der erfindungsgemäßen Expansionseinheit 32 schafft somit die Möglichkeit, gesteuert durch die in dieser Expansionseinheit 32‴ʺ vorgesehene Steuerung 132‴ʺ die Wärme im Verdichtermassenstrom V und im Unterkühlungsmassenstrom U optimal mehreren, beispielsweise auf verschiedenen Temperaturniveaus arbeitenden wärmeabgebenden Wärmetauschern, unter anderem auch dem wärmeabgebenden Wärmetauscher 22, zuzuführen und somit die Temperatur am Eingang 104 der Unterkühlungseinheit 102 zu reduzieren und dadurch auch gleichzeitig durch Steuerung des Unterkühlungsmassenstroms U die Expansionseinheit 32‴ʺ optimal zu betreiben.

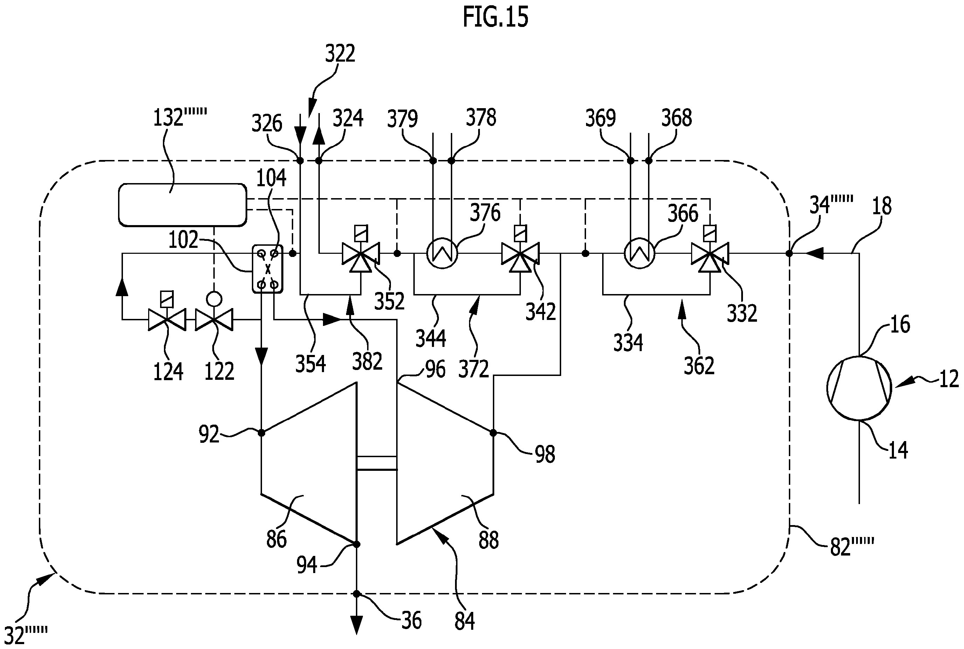

Bei einem siebten Ausführungsbeispiel einer erfindungsgemäßen Expansionseinheit, dargestellt in Fig. 15, sind diejenigen Elemente, die mit denen der voranstehenden Ausführungsbeispiele identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

Im Gegensatz zum sechsten Ausführungsbeispiel sind bei der Expansionseinheit 32ʺʺʺ die Wärmetauscheranschlusseinheiten 362 und 372 so ausgebildet, dass die diesem zugeordneten Wärmetauscher 366 und 376 an der Vorrichtungsbasis 82ʺʺʺ unmittelbar angeordnet sind und somit die Dreiwegeventile 332 und 342 unmittelbar die Durchströmung durch die Wärmetauscher 366, 376 steuern, so dass als externe Anschlüsse an der Vorrichtungsbasis 82 für den Wärmetauscher 366 ein Zulaufanschluss 368 und ein Ablaufanschluss 369 vorgesehen ist und für den Wärmetauscher 376 ein Zulaufanschluss 378 und ein Ablaufanschluss 379 vorgesehen ist.

Im Übrigen erfolgt durch die Steuerung 132ʺʺʺ in gleicher Weise eine Optimierung des Hochdrucks PH2 entsprechend der Temperatur des Gesamtmassenstroms G der in den Eingang 104 der Unterkühlungseinheit 102 eintritt.

Die Expansionseinheiten 32', 32", 32‴, 32ʺʺ, 32""' und 32ʺʺʺ können in gleicher Weise bei den vorstehend beschriebenen Ausführungsbeispielen von Kühlkreisläufen eingesetzt werden, wie das erste Ausführungsbeispiel der Expansionseinheit 32.

## Patentansprüche

1. Kältemittelkreislauf (10), umfassend eine Kältemittelverdichtereinheit (12), einen druckseitig der Kältemittelverdichtereinheit (12) im Kältemittelkreislauf (10) angeordneten wärmeabgebenden Wärmetauscher (22), eine Hochdruckleitung (18) die einen Druckanschluss (16) der Kältemittelverdichtereinheit (12) mit einem Eingang des wärmeabgebenden Wärmetauschers (22) verbindet eine Expansionseinheit (32) sowie eine Kühlstufe (62) mit mindestens einem wärmeaufnehmenden Wärmetauscher (64), wobei die Expansionseinheit (32) ein Expansionssystem (30) mit einer Unterkühlungseinheit (102) zum Unterkühlen eines der Expansionseinheit (32) zugeführten Massenstroms eines Kältemittels, mit einer Expansionskompressionseinheit (84) umfassend eine Expanderstufe (86) und eine Kompressorstufe (88), mit einer Verzweigung (116), welche von einem der Expansionseinheit (32) zugeführten Gesamtmassenstrom (G) einen Unterkühlungsmassenstrom (U) abzweigt und mit einer Zuleitung (126) verbunden ist, die den Unterkühlungsmassenstrom zu einem Eingang (112) der Unterkühlungseinheit (102) führt, mit einem in der Zuleitung (126) vorgesehenen Expansionsorgan (122, 124), welches den Unterkühlungsmassenstrom (U) auf einen Unterkühlungsdruck (PU) expandiert, mit einer Verbindungsleitung (128), welche den aus der Unterkühlungseinheit (102) austretenden Unterkühlungsmassenstrom (U) der Kompressorstufe (88) zuführt, die ihrerseits den Unterkühlungsmassenstrom (U) auf einen Rückführungshochdruck (PR) verdichtet, umfasst, **dadurch gekennzeichnet, dass** die Expanderstufe (86) und die Kompressorstufe (88) der Expansionskompressionseinheit (84) mechanisch funktionell gekoppelt sind, dass der Kältemittelkreislauf (10) eine Hochdruckrückleitung (78) aufweist, die einen Hochdruckausgangsanschluss (38) der Expansionseinheit (32) mit der Hochdruckleitung (18) verbindet, dass der Rückführungshochdruck (PR) mindestens einem Hochdruck (PH1) eines Verdichtermassenstroms (V) entspricht, dem der Unterkühlungsmassenstrom (U) von dem Hochdruckausgangsanschlus (38) über die Hochdruckrückleitung (78) zugeführt wird, und dass eine elektrisch arbeitenden Steuerung (132) vorgesehen ist, welche eine Umgebungstemperatur und/oder eine Temperatur des der Expansionseinheit (32) und/oder der Expanderstufe (86) zugeführten Massenstroms des Kältemittels erfasst und entsprechend dieser Temperatur einen Eingangsdruck der Expansionseinheit (32) oder der Expansionskompressionseinheit (84) durch Steuerung des Unterkühlungsmassenstroms (U) mittels des von der Steuerung (132) elektrisch angesteuerten Expansionsorgans (122) einstellt.

2. Kältemittelkreislauf (10) nach Anspruch 1, **dadurch gekennzeichnet, dass** die Verzweigung (116) zwischen der Unterkühlungseinheit (102) und der Expansionskompressionseinheit (84) angeordnet ist und nach der Unterkühlungseinheit (102) von dem Gesamtmassenstrom (G) den Unterkühlungsmassenstrom (U) abzweigt.

3. Kältemittelkreislauf (10) nach Anspruch 1 oder 2, **dadurch gekennzeichnet, dass** die Unterkühlungseinheit (102) als Wärmetauschereinheit ausgebildet ist und den zur Expanderstufe (86) strömenden Massenstrom des Kältemittels durch den im Gegenstrom durch diese geführten Unterkühlungsmassenstrom U kühlt.

4. Kältemittelkreislauf (10) nach Anspruch 1 oder 2, **dadurch gekennzeichnet, dass** die Unterkühlungseinheit (102') als Sammelbehälter (262) ausgebildet ist, in welchem sich ein Bad (264) aus flüssigem Kältemittel des Unterkühlungsmassenstroms (U) ausbildet, welches ein den zur Expanderstufe (86) strömenden Massenstrom des Kältemittels durch das Bad (264) führendes Element (268) kühlt, wobei sich über dem Bad (264) ein Gasvolumen (266) bildet, aus welchem der gasförmige Unterkühlungsmassenstrom (U) abgeführt wird.

5. Kältemittelkreislauf (10) nach einem der voranstehenden Ansprüche, **dadurch gekennzeichnet, dass** die Steuerung (132) die Umgebungstemperatur und/oder die Temperatur des Massenstroms des Kältemittels vor einem Eingang (104) der Unterkühlungseinheit (102) und/oder vor einem Expandereingang (92) mittels eines Sensors (134) misst.

6. Kältemittelkreislauf (10) nach einem der voranstehenden Ansprüche, **dadurch gekennzeichnet, dass** die Steuerung (132) eine elektronische, einen Prozessor umfassende Steuerung (132) ist, die mittels eines Steuerprogramms das Expansionsorgan (122) elektrisch ansteuert.

7. Kältemittelkreislauf (10) nach einem der voranstehenden Ansprüche, **dadurch gekennzeichnet, dass** die Expanderstufe (86) und die Kompressorstufe (88) durch eine Freikolbenmaschine gebildet sind, in welcher mindestens ein Freikolben (152, 154) in einer Kolbenkammer (144, 146) frei bewegbar ist, dass insbesondere die Expansionskompressionseinheit (84) zwei Kolbenkammern (144, 146) aufweist, in denen jeweils ein Freikolben (152, 154) bewegbar ist, dass insbesondere die Freikolben (152, 154) miteinander gekoppelt bewegbar sind, dass insbesondere ein erster Freikolben (152) in der jeweiligen Kolbenkammer (144) eine erste Expansionskammer (162) und eine erste Kompressionskammer (166) voneinander trennt, dass insbesondere ein zweiter Freikolben (154) in der jeweiligen Kolbenkammer (146) eine zweite Expansionskammer (164) von einer zweiten Kompressionskammer (168) trennt, dass insbesondere die beiden Freikolben (152, 154) in den Kolbenkammern (144, 146) koaxial zueinander angeordnet und bewegbar sind, dass insbesondere die erste Kolbenkammer (144) von der zweiten Kolbenkammer (146) durch einen Trennkörper (148) getrennt ist, dass insbesondere die beiden Expansionskammern (162, 164) an den Trennkörper (148) angrenzend in den Kolbenkammern (144, 146) angeordnet sind, dass insbesondere die beiden Kompressionskammern (166, 168) auf den Expansionskammern (162, 164) gegenüberliegenden Seiten der jeweiligen Freikolben (152, 154) angeordnet sind, dass insbesondere ein die Freikolben (152, 154) koppelndes Kopplungselement (172) sich durch den Trennkörper (148) hindurch erstreckt und relativ zu diesem bewegbar ist, dass insbesondere das Kopplungselement (172) sich jeweils durch die Expansionskammern (162, 164) bis zu dem jeweiligen Freikolben (152, 154) erstreckt.

8. Kältemittelkreislauf (10) nach Anspruch 7, **dadurch gekennzeichnet, dass** der Zustrom des Kältemittels zu den Expansionskammern (162, 164) durch ein Schiebersystem (202) steuerbar ist, dass insbesondere das Schiebersystem (202) durch einen Schieberantrieb (207) steuerbar ist, dass insbesondere der Schieberantrieb (207) durch eine elektrische Steuerung (203) gesteuert ist, welche mindestens eine Position der Freikolben (152, 154) mittels mindestens einem diesen zugeordneten Positionssensor (204, 206) erfasst, oder dass insbesondere der Schieberantrieb (207') durch die Druckdifferenz zwischen einem Expandereingang (92) und einem Expanderausgang (94) steuerbar ist, dass insbesondere der Schieberantrieb (207') als doppelwirkender Betätigungszylinder ausgebildet ist, dessen Kolben (205) einerseits mit dem Druck am Expandereingang (92) und andererseits mit dem Druck am Expanderausgang (94) beaufschlagt ist, dass insbesondere der Schieberantrieb (207') durch einen Steuerschieber (209) ansteuerbar ist, welcher die Beaufschlagung des Kolbens (205) mit dem Druck am Expandereingang (92) einerseits und am Expanderausgang (94) andererseits steuert, dass insbesondere der Steuerschieber (209) die Positionen der Freikolben (152, 154) erfasst, dass insbesondere der Steuerschieber (209) durch die Freikolben (152, 154) bewegbar ist.

9. Kältemittelkreislauf (10) nach einem der voranstehenden Ansprüche, **dadurch gekennzeichnet, dass** die Expansionseinheit (32) eine Vorrichtungsbasis (82) aufweist, an welcher die Unterkühlungseinheit (102) und die Expansionskompressionseinheit (84) angeordnet sind, dass insbesondere an der Vorrichtungsbasis (82) die Steuereinheit (132) angeordnet ist, dass insbesondere an der Vorrichtungsbasis (82) ein Hochdruckeingangsanschluss (34) und ein Expansionsdruckausgangsanschluss (36) angeordnet ist, dass insbesondere an der Vorrichtungsbasis ein Hochdruckausgangsanschluss (38) angeordnet ist, dass insbesondere an der Vorrichtungsbasis (82) Wärmetauscheranschlusseinheiten (362, 372, 382) vorgesehen sind, dass insbesondere jede der Wärmetauscheranschlusseinheiten (362, 372, 382) jeweils ein Dreiwegeventil (332, 342, 352) und jeweils eine Überbrückung (334, 344, 354) für den jeweiligen Wärmetauscher aufweist, dass insbesondere mindestens eine der Wärmetauscheranschlusseinheiten (362, 372, 382) mit einem hochdruckseitigen, Wärme an die Umgebungsluft abgebenden Wärmetauscher (22) verbunden ist.

10. Kältemittelkreislauf (10) nach einem der voranstehenden Ansprüche, **dadurch gekennzeichnet, dass** die Expansionseinheit (32') ein Expansionssystem (30) mit einem ersten, durch den Quotient des Volumens der Kompressionskammern (166, 168) zu dem Volumen der Expansionskammern (162, 164) definierten Volumenverhältnis aufweist, dass dem ersten Expansionssystem (30a) ein zweites Expansionssystem (30b) parallelgeschaltet ist, dessen Volumenverhältnis kleiner als das des ersten Expansionssystems (30a) ist, dass insbesondere die Expansionssysteme (30a, 30b) derart betrieben sind, dass das eine (30a) der Expansionssysteme im transkritischen Bereich und die andere (30b) der Expansionssysteme im subkritischen Bereich arbeitet, dass insbesondere das Expansionssystem (30a) mit dem größeren Volumenverhältnis im transkritischen Bereich und das Expansionssystem (30b) mit dem kleineren Volumenverhältnis im subkritischen Bereich arbeitet, und dass insbesondere die Steuerungen (132a, 132b) der Expansionssysteme (30a, 30b) miteinander gekoppelt sind.

11. Kältemittelkreislauf (10) nach einem der Ansprüche 1 bis 9, **dadurch gekennzeichnet, dass** die Expansionseinheit (32") zwei Expansionskompressionseinheiten (84a, 84b) umfasst, von denen eine (84a) ein erstes, durch den Quotient aus dem Volumen der Kompressionskammern (166, 168) zu dem Volumen der Expansionskammern (162, 164) definiertes Volumenverhältnis aufweist und die andere (84b) ein zweites Volumenverhältnis aufweist, das von dem ersten Volumenverhältnis abweicht, dass insbesondere das Volumenverhältnis der ersten Expansionskompressionseinheit (84a) größer ist als das Volumenverhältnis der zweiten Expansionskompressionseinheit (84b), dass insbesondere die erste Expansionskompressionseinheit (84a) im transkritischen Bereich arbeitet und die zweite Expansionskompressionseinheit (84b) im subkritischen Bereich arbeitet, dass insbesondere die Steuerung einen Einsatz der jeweiligen Expansionskompressionseinheiten (84a, 84b) steuert, dass insbesondere die Steuerung (132) die Aufteilung des Expansionsmassenstroms (E) in die zu den Expanderstufen (86a, 86b) strömenden Teilmassenströme über die jeweiligen Unterkühlungsmassenströme steuert.

12. Kältemittelkreislauf (10) nach einem der voranstehenden Ansprüche, **dadurch gekennzeichnet, dass** auf die Kühlstufe (62) folgend ein Phasenseparator (72) angeordnet ist, dessen Gasphase von einer Saugdruckleitung (74) dem Kältemittelverdichter (12) zugeführt wird, dass insbesondere die Kühlstufe (62) mindestens ein Expansionsorgan (66) aufweist.

13. Kältemittelkreislauf (10) nach Anspruch 12, **dadurch gekennzeichnet, dass** zwischen der Expansionseinheit (32) und der Kühlstufe (62) ein Zwischendrucksammler (44) angeordnet ist, in dessen Bad (46) sich eine Flüssigphase des Kältemittels sammelt und in dessen über dem Bad (46) stehendem Gasvolumen (52) sich eine Gasphase des Kältemittels sammelt, dass insbesondere aus dem Gasvolumen (52) des Zwischendrucksammlers (44) ein Zusatzmassenstrom (Z) abgeführt wird, dass insbesondere der Zusatzmassenstrom (Z) über ein Expansionsorgan (54) der Saugdruckleitung (74) zugeführt wird, dass insbesondere der vom Expansionsorgan (54) expandierte Zusatzmassenstrom (Z) einen zur Kühlstufe (62) geführten Hauptmassenstrom (H) in einem Wärmetauscher (58) kühlt.

14. Kältemittelkreislauf (10) nach Anspruch 12 oder 13, **dadurch gekennzeichnet, dass** der Kühlstufe (62) eine Tiefkühlstufe (212) parallelgeschaltet ist, dass insbesondere ein der Tiefkühlstufe (212) zugeführter Tiefkühlmassenstrom (T) vor einer Expansion in einem der Tiefkühlstufe (212) zugeordneten Expansionsorgan (216) durch den in der Tiefkühlstufe (212) expandierten Massenstrom mittels eines Wärmetauschers (226) gekühlt wird.

15. Kältemittelkreislauf (10) nach einem der Ansprüche 12 bis 14, **dadurch gekennzeichnet, dass** der von dem wärmeabgebenden Wärmetauscher (22) gekühlte Gesamtmassenstrom (G) mittels eines Wärmetauschers (232) durch den durch das Expansionsorgan (54) expandierten Zusatzmassenstrom (Z) gekühlt wird.

16. Kältemittelkreislauf (10) nach einem der Ansprüche 12 bis 15, **dadurch gekennzeichnet, dass** der Expansionseinheit (32) ein Wärmetauscher (242) nachgeordnet ist, in welchem ein Wärmetauschermedium einer Kühlanlage durch den Expansionsmassenstrom (E) gekühlt wird.

## Claims

1. A refrigerant circuit (10), including a refrigerant compressor unit (12), a heat exchanger (22) that emits heat and is arranged in the refrigerant circuit (10) on the pressure side of the refrigerant compressor unit (12), a high-pressure conduit (18) which connects a pressure connector (16) of the refrigerant compressor unit (12) with an input of the heat exchanger (22) that emits heat an expansion unit (32) and a cooling stage (62) having at least one heat-absorbing heat exchanger (64), wherein the expansion unit (32) comprises an expansion system (30) having a subcooling unit (102) for subcooling a mass flow of a refrigerant that is supplied to the expansion unit (32), having an expansion/compression unit (84) including an expander stage (86) and a compressor stage (88), having a branching point (116) that splits off a subcooling mass flow (U) from a total mass flow (G) supplied to the expansion unit (32) and that is connected to a supply conduit (126) that guides the subcooling mass flow to an inlet (112) of the subcooling unit (102), having an expansion member (122, 124) that is provided in the supply conduit (126) and that expands the subcooling mass flow (U) to a subcooling pressure (PU), having a connection conduit (128) that supplies the subcooling mass flow (U) exiting from the subcooling unit (102) to the compression stage (88), which for its part compresses the subcooling mass flow (U) to a return high pressure (PR), **characterised in that** the expander stage (86) and the compressor stage (88) of the expansion/compression unit (84) are coupled in a mechanically functional manner, **in that** the refrigerant circuit (10) comprises a high-pressure return conduit (78), which connects a high-pressure outlet connector (38) of the expansion unit (32) with the high-pressure conduit (18), **in that** the return high pressure (PR) corresponds at least to a high pressure (PH1) of a compressor mass flow (V), to which the subcooling mass flow (U) is supplied from the high-pressure outlet connector (38) via the high-pressure return conduit (78), and **in that** an electrically operated controller (132) that detects an ambient temperature and/or a temperature of the mass flow of refrigerant that is supplied to the expansion unit (32) and/or the expander stage (86), and in accordance with this temperature adjusts an inlet pressure of the expansion unit (32) or the expansion/compression unit (84) by controlling the subcooling mass flow (U) using the expansion member (122) that is electrically controlled by the controller (132).

2. A refrigerant circuit (10) according to Claim 1, **characterised in that** the branching point (116) is arranged between the subcooling unit (102) and the expansion/compression unit (84) and splits off the subcooling mass flow (U) from the total mass flow (G) downstream of the subcooling unit (102).

3. A refrigerant circuit (10) according to Claim 1 or 2, **characterised in that** the subcooling unit (102) takes the form of a heat exchanger unit and cools the mass flow of refrigerant flowing to the expander stage (86) using the subcooling mass flow U guided through the latter in counterflow.

4. A refrigerant circuit (10) according to Claim 1 or 2, **characterised in that** the subcooling unit (102') takes the form of a collecting container (262) in which a bath (264) of liquid refrigerant of the subcooling mass flow (U) is formed that cools an element (268) that guides the mass flow of refrigerant flowing to the expander stage (86) through the bath (264), wherein a volume of gas (266) forms above the bath (264) and the gaseous subcooling mass flow (U) is removed therefrom.

5. A refrigerant circuit (10) according to one of the preceding claims, **characterised in that** the controller (132) uses a sensor (134) to measure the ambient temperature and/or the temperature of the mass flow of refrigerant upstream of an inlet (104) to the subcooling unit (102) and/or upstream of an expander input (92).

6. A refrigerant circuit (10) according to one of the preceding claims, **characterised in that** the controller (132) is an electronic controller (132) that includes a processor and electrically controls the expansion member (122) using a control program.

7. A refrigerant circuit (10) according to one of the preceding claims, **characterised in that** the expander stage (86) and the compressor stage (88) are formed by a free-piston machine in which at least one free piston (152, 154) is freely movable in a piston chamber (144, 146), **in that** in particular the expansion/compression unit (84) has two piston chambers (144, 146) in each of which a free piston (152, 154) is movable, **in that** in particular the free pistons (152, 154) are movable coupled to one another, **in that** in particular a first free piston (152) in the respective piston chamber (144) separates a first expansion chamber (162) and a first compression chamber (166) from one another, **in that** in particular a second free piston (154) in the respective piston chamber (146) separates a second expansion chamber (164) from a second compression chamber (168), **in that** in particular the two free pistons (152, 154) are arranged and movable coaxially with one another in the piston chambers (144, 146), **in that** in particular the first piston chamber (144) is separated from the second piston chamber (146) by a separating body (148), **in that** in particular the two expansion chambers (162, 164) are arranged in the piston chambers (144, 146) adjacent to the separating body (148), **in that** in particular the two compression chambers (166, 168) are arranged on the opposite sides of the respective free pistons (152, 154) to the expansion chambers (162, 164), **in that** in particular a coupling element (172) that couples the free pistons (152, 154) extends through the separating body (148) and is movable relative thereto, **in that** in particular the coupling element (172) extends through each of the expansion chambers (162, 164) as far as the respective free piston (152, 154).

8. A refrigerant circuit (10) according to claim 7, **characterised in that** the incoming flow of refrigerant to the expansion chambers (162, 164) is controllable by a slider system (202), **in that** in particular the slider system (202) is controllable by a slider drive (207), **in that** in particular the slider drive (207) is controlled by an electrical controller (203) that detects at least one position of the free pistons (152, 154) using at least one position sensor (204, 206) that is associated with these free pistons (152, 154), or **in that** in particular the slider drive (207') is controllable by the difference in pressure between an expander inlet (92) and an expander outlet (94), **in that** in particular the slider drive (207') takes the form of a double-acting actuating cylinder the piston (205) of which is acted upon on one side by the pressure at the expander inlet (92) and on the other by the pressure at the expander outlet (94), **in that** in particular the slider drive (207') is controllable by a control slider (209) that controls the action on the piston (205) by the pressure on one side at the expander inlet (92) and on the other at the expander outlet (94), **in that** in particular the control slider (209) detects the positions of the free pistons (152, 154), **in that** in particular the control slider (209) is movable by the free pistons (152, 154).

9. A refrigerant circuit (10) according to one of the preceding claims, **characterised in that** the expansion unit (32) has a device base (82) on which the subcooling unit (102) and the expansion/compression unit (84) are arranged, **in that** in particular the control unit (132) is arranged on the device base (82), **in that** in particular a high-pressure inlet connector (34) and an expansion-pressure outlet connector (36) are arranged on the device base (82), **in that** in particular a high-pressure outlet connector (38) is arranged on the device base, **in that** in particular heat exchanger connector units (362, 372, 382) are provided on the device base (82), **in that** in particular each of the heat exchanger connector units (362, 372, 382) has a respective three-way valve (332, 342, 352) and a respective bypass (334, 344, 354) for the respective heat exchanger, **in that** in particular at least one of the heat exchanger connector units (362, 372, 382) is connected to a heat exchanger (22) on the high-pressure side that emits heat to the ambient air.

10. A refrigerant circuit (10) according to one of the preceding claims, **characterised in that** the expansion unit (32') has an expansion system (30) having a first volume ratio defined by the quotient of the volume of the compression chambers (166, 168) to the volume of the expansion chambers (162, 164), **in that** there is connected in parallel with the first expansion system (30a) a second expansion system (30b) the volume ratio of which is smaller than that of the first expansion system (30a), **in that** in particular the expansion systems (30a, 30b) are operated such that one (30a) of the expansion systems operates in the transcritical range and the other (30b) expansion system operates in the subcritical range, **in that** in particular the expansion system (30a) having the larger volume ratio operates in the transcritical range and the expansion system (30b) having the smaller volume ratio operates in the subcritical range, and **in that** in particular the controllers (132a, 132b) of the expansion systems (30a, 30b) are coupled to one another.

11. A refrigerant circuit (10) according to one of Claims 1 to 9, **characterised in that** the expansion unit (32") includes two expansion/compression units (84a, 84b), of which one (84a) has a first volume ratio defined by the quotient of the volume of the compression chambers (166, 168) to the volume of the expansion chambers (162, 164) and the other (84b) has a second volume ratio that differs from the first volume ratio, **in that** in particular the volume ratio of the first expansion/compression unit (84a) is larger than the volume ratio of the second expansion/compression unit (84b), **in that** in particular the first expansion/compression unit (84a) operates in the transcritical range and the second expansion/compression unit (84b) operates in the subcritical range, **in that** in particular the controller controls a use of the respective expansion/compression units (84a, 84b), **in that** in particular the controller (132) uses the respective subcooling mass flows to control division of the expansion mass flow (E) into the partial mass flows that flow to the expander stages (86a, 86b).

12. A refrigerant circuit (10) according to one of the preceding claims **characterised in that** there is arranged downstream of the cooling stage (62) a phase separator (72), the gas phase of which is supplied to the refrigerant compressor (12) by a suction-pressure conduit (74), **in that** in particular the cooling stage (62) has at least one expansion member (66).

13. A refrigerant circuit (10) according to Claim 12, **characterised in that** there is arranged between the expansion unit (32) and the cooling stage (62) an intermediate pressure collector (44), in the bath (46) of which a liquid phase of the refrigerant collects, and in the gas volume (52) of which above the bath (46) a gas phase of the refrigerant collects, **in that** in particular an additional mass flow (Z) is removed from the gas volume (52) of the intermediate pressure collector (44), **in that** in particular the additional mass flow (Z) is supplied to the suction-pressure conduit (74) by way of an expansion member (54), **in that** in particular the additional mass flow (Z) that is expanded by the expansion member (54) cools a main mass flow (H), which is guided to the cooling stage (62), in a heat exchanger (58).

14. A refrigerant circuit (10) according to Claim 12 or 13, **characterised in that** a freezing stage (212) is connected in parallel with the cooling stage (62),**in that** in particular a freezing mass flow (T) that is supplied to the freezing stage (212) is cooled before expansion in an expansion member (216) associated with the freezing stage (212), by the mass flow that is expanded in the freezing stage (212), using a heat exchanger (226).

15. A refrigerant circuit (10) according to one of Claims 12 to 14, **characterised in that** the total mass flow (G) that is cooled by the heat-emitting heat exchanger (22) is cooled by the additional mass flow (Z) that is expanded by the expansion member (54), using a heat exchanger (232).

16. A refrigerant circuit (10) according to one of Claims 12 to 15, **characterised in that** there is arranged downstream of the expansion unit (32) a heat exchanger (242) in which a heat exchanger medium of a refrigeration system is cooled by the expansion mass flow (E).

## Revendications

1. Circuit de réfrigération (10), comprenant une unité à compresseur de fluide frigorigène (12), un échangeur de chaleur (22) de transmission de chaleur disposé côté pression de l'unité à compresseur de fluide frigorigène (12) dans le circuit de réfrigération (10), une conduite à haute pression (18), qui raccorde un raccord de pression (16) de l'unité à compresseur de fluide frigorigène (12) à une entrée de l'échangeur de chaleur (22) de transmission de chaleur, une unité d'expansion (32) ainsi qu'un étage de refroidissement (62) avec au moins un échangeur d'absorption de chaleur (64), dans lequel l'unité d'expansion (32) comprend un système d'expansion (30) avec une unité de sous-refroidissement (102) pour le sous-refroidissement d'un flux massique, amené à l'unité d'expansion (32), d'un fluide frigorigène, avec une unité d'expansion et de compression (84) comprenant un étage expanseur (86) et un étage compresseur (88), avec un embranchement (116), qui prélève un flux massique de sous-refroidissement (U) d'un flux massique total (G) amené à l'unité d'expansion (32), et qui est raccordé à une conduite d'arrivée (126), qui guide le flux massique de sous-refroidissement à une entrée (112) de l'unité de sous-refroidissement (102), avec un organe d'expansion (122, 124) prévu dans la conduite d'arrivée (126), lequel expanse le flux massique de sous-refroidissement (U) à une pression de sous-refroidissement (PU), avec une conduite de raccordement (128), laquelle amène le flux massique de sous-refroidissement (U) sortant de l'unité de sous-refroidissement (102) à l'étage compresseur (88), qui comprime à son tour le flux massique de sous-refroidissement (U) à une haute pression de retour (PR), **caractérisé en ce que** l'étage expanseur (86) et l'étage compresseur (88) de l'unité d'expansion et de compression (84) sont couplés mécaniquement de manière fonctionnelle, que le circuit de réfrigération (10) présente une conduite de retour haute pression (78), qui raccorde un raccord de sortie haute pression (38) de l'unité d'expansion (32) à la conduite haute pression (18), que la haute pression de retour (PR) correspond au moins à une haute pression (PH1) d'un flux massique de compresseur (V), auquel le flux massique de sous-refroidissement (U) est amené par le raccord de sortie haute pression (38) par l'intermédiaire de la conduite de retour haute pression (78), et qu'une commande (132) à fonctionnement électrique est prévue, laquelle détecte une température ambiante et/ou une température du flux massique amené à l'unité d'expansion (32) et/ou à l'étage expanseur (86) et règle, conformément à cette température, une pression d'entrée de l'unité d'expansion (32) ou de l'unité d'expansion et de compression (84) par la commande du flux massique de sous-refroidissement (U) au moyen de l'organe d'expansion (122) piloté de manière électrique par la commande (132).

2. Circuit de réfrigération (10) selon la revendication 1, **caractérisé en ce que** l'embranchement (116) est disposé entre l'unité de sous-refroidissement (102) et l'unité d'expansion et de compression (84) et prélève le flux massique de sous-refroidissement (U) du flux massique total (G) après l'unité de sous-refroidissement (102).

3. Circuit de réfrigération (10) selon la revendication 1 ou 2, **caractérisé en ce que** l'unité de sous-refroidissement (102) est réalisée en tant qu'unité à échangeur de chaleur et refroidit le flux massique, circulant vers l'étage expanseur (86), du fluide frigorigène par le flux massique de sous-refroidissement guidé par celle-ci à contre-courant.

4. Circuit de réfrigération (10) selon la revendication 1 ou 2, **caractérisé en ce que** l'unité de sous-refroidissement (102') est réalisée en tant que récipient de collecte (262), dans lequel un bain (264) composé de fluide frigorigène liquide du flux massique de sous-refroidissement (U) se forme, lequel refroidit un élément (268) guidant le flux massique, circulant vers l'étage expanseur (86), du fluide frigorigène à travers le bain (264), dans lequel un volume de gaz (266) se forme au-dessus du bain (264), duquel est évacué le flux massique de sous-refroidissement (U) gazeux.

5. Circuit de réfrigération (10) selon l'une quelconque des revendications précédentes, **caractérisé en ce que** la commande (132) mesure au moyen d'un capteur (134) la température ambiante et/ou la température du flux massique du fluide frigorigène avant une entrée (104) de l'unité de sous-refroidissement (102) et/ou avec une entrée d'expanseur (92).

6. Circuit de réfrigération (10) selon l'une quelconque des revendications précédentes, **caractérisé en ce que** la commande (132) est une commande (132) électronique comprenant un processeur, qui pilote de manière électrique l'organe d'expansion (122) au moyen d'un programme de commande.

7. Circuit de réfrigération (10) selon l'une quelconque des revendications précédentes, **caractérisé en ce que** l'étage expanseur (86) et l'étage compresseur (88) sont formés par une machine à pistons libres, dans laquelle au moins un piston libre (152, 154) peut être déplacé librement dans une chambre de pistons (144, 146), qu'en particulier l'unité d'expansion et de compression (84) présente deux chambres de piston (144, 146), dans lesquelles respectivement un piston libre (152, 154) peut être déplacé, qu'en particulier les pistons libres (152, 154) peuvent être déplacés de manière couplée les uns aux autres, qu'en particulier un premier piston libre (152) sépare dans la chambre de pistons (144) respective une première chambre d'expansion (162) et une première chambre de compression (166) l'une de l'autre, qu'en particulier un deuxième piston libre (154) sépare dans la chambre de pistons (146) respective une deuxième chambre d'expansion (164) d'une deuxième chambre de compression (168), qu'en particulier les deux pistons libres (152, 154) sont disposés l'un par rapport à l'autre de manière coaxiale dans les chambres de pistons (144, 146) et peuvent être déplacés, qu'en particulier la première chambre de pistons (144) est séparée de la deuxième chambre de pistons (146) par un corps de séparation (148), qu'en particulier les deux chambres d'expansion (162, 164) sont disposées dans les chambres de pistons (144, 146) de manière à jouxter le corps de séparation (148), qu'en particulier les deux chambres de compression (166, 168) sont disposées sur les côtés, faisant face aux chambres d'expansion (162, 164), des pistons libres (152, 154) respectifs, qu'en particulier un élément de couplage (172) coulant les pistons libres (152, 154) s'étend à travers le corps de séparation (148) et peut être déplacé par rapport à celui-ci, qu'en particulier l'élément de couplage (172) s'étend respectivement à travers les chambres d'expansion (162, 164) jusqu'au piston libre (152, 154) respectif.

8. Circuit de réfrigération (10) selon la revendication 7, **caractérisé en ce que** le flux entrant du fluide frigorigène aux chambres d'expansion (162, 164) peut être commandé par un système de coulisseau (202), qu'en particulier le système de coulisseau (202) peut être commandé par un entraînement de coulisseau (207), qu'en particulier l'entraînement de coulisseau (207) est commandé par une commande (203) électrique, laquelle détecte au moins une position des pistons libres (152, 154) au moyen d'au moins un capteur de position (204, 206) associé à ceux-ci, ou qu'en particulier l'entraînement de coulisseau (207') peut être commandé par la différence de pression entre une entrée d'expanseur (92) et une sortie d'expanseur (94), qu'en particulier l'entraînement de coulisseau (207') est réalisé en tant qu'un cylindre d'actionnement à double action, dont le piston (205) est soumis d'une part à l'action de la pression sur l'entrée d'expanseur (92) et d'autre part à l'action de la pression sur la sortie d'expanseur (94), qu'en particulier l'entraînement de coulisseau (207') peut être commandé par un coulisseau de commande (209), lequel commande l'action exercée par la pression sur l'entrée d'expanseur (92) d'une part et sur la sortie d'expanseur (94) d'autre part par le piston (205), qu'en particulier le coulisseau de commande (209) détecte les positions des pistons libres (152, 154), qu'en particulier le coulisseau de commande (209) peut être déplacé par les pistons libres (152, 154).

9. Circuit de réfrigération (10) selon l'une quelconque des revendications précédentes, **caractérisé en ce que** l'unité d'expansion (32) présente une base de dispositif (82), sur laquelle l'unité de sous-refroidissement (102) et l'unité d'expansion et de compression (84) sont disposées, qu'en particulier l'unité de commande (132) est disposée sur la base de dispositif (82), qu'en particulier un raccord d'entrée haute pression (34) et un raccord de sortie de pression d'expansion (36) sont disposés sur la base de dispositif (82), qu'en particulier un raccord de sortie haute pression (38) est disposé sur la base de dispositif, qu'en particulier des unités de raccordement d'échangeur de chaleur (362, 372, 382) sont prévues sur la base de dispositif (82), qu'en particulier chacune des unités de raccordement d'échangeur de chaleur (362, 372, 382) présente respectivement une soupape à trois voies (332, 342, 352) et respectivement un système de pontage (334, 344, 354) pour l'échangeur de chaleur respectif, qu'en particulier au moins une des unités de raccordement d'échangeur de chaleur (363, 372, 382) est raccordée à un échangeur de chaleur (22) côté haute pression transmettant de la chaleur à l'air ambiant.

10. Circuit de réfrigération (10) selon l'une quelconque des revendications précédentes, **caractérisé en ce que** l'unité d'expansion (32') présente un système d'expansion (30) avec un premier rapport volumique défini par le quotient du volume des chambres de compression (166, 168) par le volume des chambres d'expansion (162, 164), qu'un deuxième système d'expansion (30b) est branché en parallèle du premier système d'expansion (30a), dont le rapport volumique est inférieur à celui du premier système d'expansion (30a), qu'en particulier les systèmes d'expansion (30a, 30b) fonctionnent de telle manière que l'un (30a) des systèmes d'expansion fonctionne dans la plage transcritique et l'autre (30b) des systèmes d'expansion fonctionne dans la plage sous-critique, qu'en particulier le système d'expansion (30a) fonctionne avec le plus grand rapport volumique dans la plage transcritique et le système d'expansion (30b) fonctionne avec le plus petit rapport volumique dans la plage sous-critique, et qu'en particulier les commandes (132a, 132b) des systèmes d'expansion (30a, 30b) sont couplées entre elles.

11. Circuit de réfrigération (10) selon l'une quelconque des revendications 1 à 9, **caractérisé en ce que** l'unité d'expansion (32'') comprend deux unités d'expansion et de compression (84a, 84b), dont une (84a) présente un premier rapport volumique défini par le quotient du volume des chambres de compression (166, 168) par le volume des chambres d'expansion (162, 164) et l'autre (84b) présente un deuxième rapport volumique, qui diverge du premier rapport volumique, qu'en particulier le rapport volumique de la première unité d'expansion et de compression (84a) est plus grand que le rapport volumique de la deuxième unité d'expansion et de compression (84b), qu'en particulier la première unité d'expansion et de compression (84a) fonctionne dans la plage transcritique et la deuxième unité d'expansion et de compression (84b) fonctionne dans la plage sous-critique, qu'en particulier la commande commande un insert des unités d'expansion et de compression (84a, 84b) respectives, qu'en particulier la commande (132) commande la répartition du flux massique d'expansion (E) dans les flux massiques partiels circulant vers les étages expanseurs (86a, 86b) par l'intermédiaire des flux massiques de sous-refroidissement respectifs.

12. Circuit de réfrigération (10) selon l'une quelconque des revendications précédentes, **caractérisé en ce qu'**est disposé, après l'étage de refroidissement (62), un séparateur de phases (72), dont la phase gazeuse est amenée au compresseur de fluide frigorigène (12) par une conduite de pression d'aspiration (74), qu'en particulier l'étage de refroidissement (62) présente au moins un organe d'expansion (66).

13. Circuit de réfrigération (10) selon la revendication 12, **caractérisé en ce qu'**est disposé entre l'unité d'expansion (32) et l'étage de refroidissement (62) un collecteur de pression intermédiaire (44), dans le bain (46) duquel s'accumule une phase liquide du fluide frigorigène et dans le volume de gaz (52) duquel se formant au-dessus du bain (46), s'accumule une phase gazeuse du fluide frigorigène, qu'en particulier un flux massique supplémentaire (Z) est évacué du volume de gaz (52) du collecteur de pression intermédiaire (44), qu'en particulier le flux massique supplémentaire (Z) est amené à la conduite de pression d'aspiration (74) par l'intermédiaire d'un organe d'expansion (54), qu'en particulier le flux massique supplémentaire (Z) expansé par l'organe d'expansion (54) refroidit un flux massique principal (H) guidé vers l'étage de refroidissement (62) dans un échangeur de chaleur (58).

14. Circuit de réfrigération (10) selon la revendication 12 ou 13, **caractérisé en ce que** l'étage de refroidissement (62) est monté en parallèle d'un étage de congélation (212), qu'en particulier un flux massique de congélation (T) amené à l'étage de congélation (212) est refroidi au moyen d'un échangeur de chaleur (226) par le flux massique expansé dans l'étage de congélation (212) avant une expansion dans un organe d'expansion (216) associé à l'étage de congélation (212).

15. Circuit de réfrigération (10) selon l'une quelconque des revendications 12 à 14, **caractérisé en ce que** le flux massique total (G) refroidi par l'échangeur de chaleur (22) de transmission de chaleur est refroidi par le flux massique supplémentaire (Z) expansé par l'organe d'expansion (54) au moyen d'un échangeur (232).

16. Circuit de réfrigération (10) selon l'une quelconque des revendications 12 à 15, **caractérisé en ce qu'**est disposé en aval de l'unité d'expansion (32) un échangeur de chaleur (242), dans lequel un milieu d'échangeur de chaleur d'une installation de refroidissement est refroidi par le flux massique d'expansion (E).
